# EUROPÄISCHE PATENTSCHRIFT

(11) **EP 4 281 202 B1**
(45) Veröffentlichungstag und Bekanntmachung des Hinweises auf die Patenterteilung: **03.09.2025**
(21) Anmeldenummer: 22719919.7
(22) Anmeldetag: 31.03.2022
(51) Int. Cl.: B01D 9/00

(54) **VERFAHREN UND VORRICHTUNG ZUM KRISTALLISIEREN UND SEPARIEREN VON SUBSTANZEN**
METHOD AND DEVICE FOR CRYSTALLISING AND SEPARATING SUBSTANCES
PROCÉDÉ ET DISPOSITIF DE CRISTALLISATION ET DE SÉPARATION DE SUBSTANCES

(30) Priorität: 16.04.2021 BE 202105303
(43) Veröffentlichungstag der Anmeldung: 29.11.2023
(73) Patentinhaber: I-AIM-I GmbH, 53840 Troisdorf (DE)
(72) Erfinder: CHENG, Shangli, 53859 Niederkassel (DE); CHENG, Bo, 52064 Aachen (DE)
(74) Vertreter: Michalski Hüttermann & Partner Patentanwälte mbB
(86) Internationale Anmeldenummer: PCT/EP2022/058646
(87) Internationale Veröffentlichungsnummer: WO 2022/218722

(56) Entgegenhaltungen:
- JP-B1- S4 940 234
- US-A- 2 495 024
- US-A- 2 994 593
- US-A1- 2012 197 040
- US-A1- 2019 345 098

## Beschreibung

Die vorliegende Erfindung betrifft ein Verfahren und eine Vorrichtung zum Kristallisieren und Separieren von Substanzen aus einem Substanzgemisch, insbesondere aus einer übersättigten Lösung des Substanzgemisches.

In vielen Bereichen ist es von Vorteil, aus einer Lösung definierte Substanzen auszukristallisieren, um diese Substanzen zu isolieren, insbesondere in reiner Form. Ein Beispiel umfasst etwa die Enantiomerentrennung, bei der aus einem Enantiomerengemisch bestenfalls enantiomerenrein die unterschiedlichen Enantiomere getrennt werden müssen. Anwendung findet die Enantiomerentrennung etwa in der Herstellung von aktiven pharmazeutischen Wirkstoffen. Es ist somit ersichtlich, dass eine sichere und effektive Enantiomerentrennung oftmals von grundlegender Bedeutung ist.

Hinsichtlich bekannter Verfahren für die Kristallisation definierter Substanzen aus Lösungen, etwa zur Enantiomerentrennung, gibt es bereits vielfältige Lösungen aus dem Stand der Technik.

So beschreibt etwa Xichong Ye et al., Enantiomer-selective magentization of conglomerates for quantitative chiral separation, Nature Communications, (2019)10:1964 (https://doi.org/10.1038/s41467-019-09997-y,), ein Verfahren zum Trennen von Kristallen von Konglomeraten durch Verwendung von magnetischen Splittern durch eine enantiomerenselektive Magnetisierung. Dieses Verfahren hat allerdings folgende Nachteile. Die verwendeten magnetischen Splitter bestehen aus Co-Polymer mit einem enantiomerenreinen Stoff als Hilfsmittel. Das Polymer und die magnetischen Partikel als Matrix für den Versuch müssen in mehreren Stufen, in mehreren Tagen, unter Temperaturen von unter 0 °C bis 300 °C herstellt werden. Die anschließenden Trennungsprozesse dauern nochmal mehrere Tage.

US 2019/0345098 A1 beschreibt das Trennen von Enantiomeren aus einem racemischen Gemisch durch Prozesse der sogenannten bevorzugten Kristallisation. Dabei werden die Enantiomere durch gezielte Kristallisationsprozesse mit Impfkristallen erhalten.

Andrew S. Dunn et al., Resolution control in a Continuous Preferential Crystallization Process, Organic Process Research & Development, DOI: 10.1021/acs.oprd.9b00275, beschreibt ebenfalls einen Prozess der bevorzugten Kristallisation, um Enantiomere zu trennen.

US 2012/0197040 A1 beschreibt ebenfalls die Auftrennung eines racemischen Gemisches. Dabei werden wenigstens zwei Kristallisationseinheiten verwendet, um wenigstens ein Enantiomer in einer Kristallisationseinheit auszukristallisieren.

AT 357501 beschreibt ein Verfahren und eine Vorrichtung zum Ausscheiden von überschüssigen Salzen, insbesondere von Weinstein und Kalziumsalzen, aus Getränken. Hierbei wird das Getränk mit Kristallen in Kontakt gebracht, um die überschüssigen Salze auszukristallisieren. Die Kristalle können an Trägerflächen fixiert sein. Das Verfahren und die Vorrichtung dienen der Entfernung von Feststoffen aus einer Lösung, wobei die auskristallisierten Salze kein reiner Stoff, sondern ein Gemisch von mehreren unterschiedlichen Stoffen sind. Daher eignet sich die Offenbarung dieses Dokuments für die Herstellung eines salzfreien Getränks, jedoch nicht für Trennung von einem reinen Kristallfeststoff aus einer Lösung.

US 2,994,593 beschreibt eine Kristallisationsvorrichtung, welche eine große Anzahl an Impfplatten in einem geringen Volumen anordnen soll.

US 2,495,024 beschreibt eine Kristallisierungsvorrichtung, um Kristalle aus übersättigten Lösungen zu züchten.

JPS4940234 A beschreibt einen Kristallisationsvorgang mittels Impfkristallträgern.

Grundsätzlich betrifft das an sich bekannte Prinzip der bevorzugten Kristallisation die Verwendung eines Impfkristalls, welcher entweder durch Zugabe in eine Lösung oder durch Überschuss eines Enantiomers von einem Racemat in der Lösung vor dem Beginn der Kristallisation entsteht. Im Stand der Technik wie oben genannt werden insbesondere in der Lösung schwimmende Impfkristalle verwendet. Durch Rühren werden die Impfkristalle in der Lösung suspendiert. Um die Verteilung der Impfkristalle möglichst homogen in der Lösung zu erhalten und auch die Sedimentation auf den Boden der Behälter zu vermeiden, sollte die Rührgeschwindigkeit je nach Größe des Partikels optimiert werden und im Lauf des Prozesses noch angepasst werden, da Kristalle zum Teil anwachsen. Bei einer hohen Rührgeschwindigkeit kann zwar das Ziel der Verteilung erreicht werden, aber große Strömungsintensität führt zum Brechen der Kristalle durch Zusammenstoß mit Kristallen, mit den Wänden des Behälters oder mit dem Rührer, und dadurch zu einer hohen sekundären Keimbildung. Die dadurch entstehenden feinen Kristalle haben eine breite Gaußverteilung der Größe des Partikels, was die Trennung des Festprodukts von der Lösung in der anschließenden Aufarbeitung erschwert. Denn es haftet ein hoher Gehalt der Lösung und dadurch verursacht mehr Verunreinigung an den Kristallen an, es wird mehr Waschmittel beziehungsweise es werden mehr Waschvorgänge benötigt, und eine längere Trocknungszeit ist meist notwendig. Wenn das Kristallprodukt von einem Wirkstoff direkt für Arzneimittel verwendet wird, können die unterschiedlichen Partikelgrößen ferner unterschiedliche Bioverfügbarkeiten verursachen, was eine reduzierte Verwendbarkeit des unmittelbar entstehenden Produkts bedeutet.

Das Abtrennen von Kristallen aus einer Lösung beispielsweise durch Filtrieren oder Zentrifugieren aus einer Lösung gestaltet sich oftmals als sehr aufwendig, da entsprechende Vorrichtungen zum Abtrennen der Kristalle aus der Lösung bereitgestellt werden müssen.

Darüber hinaus kann das Problem auftreten, dass die Lösung beim Abtrennen der Kristalle von diesen erneut verunreinigt wird, was insbesondere bei der Trennung von Enantiomerengemischen ein Problem darstellt. Insbesondere bei einer großen Verteilung von kristallinen Partikeln kann sich die Abtrennung der Kristalle beispielsweise durch Filtration problematisch gestalten.

Im Stand der Technik wird zum Isolieren nach der Kristallisation die Suspension mit den produzierten Kristallen in einen anderen Behälter übertragen, wo die Kristalle von der Lösung getrennt werden, insbesondere durch Filtrieren oder Zentrifugieren. Die gesamte Lösung muss in diesem Prozess durch den neuen Behälter des Filters oder durch die Zentrifugentrommel durchfließen. Bei industriellen Prozessen wird die Suspension noch von Pumpe und Rohrleitung übertagen. Jeder neue Kontakt, beispielsweise mit der Rohrleitung, der Pumpe, dem Filterbehälter oder der Zentrifugentrommel bedeuten zusätzliche mögliche Kontaminationsquellen und erschweren die Kontrolle der Temperatur der Suspension. Der Prozessablauf der Filtration oder Zentrifugation der gesamten Suspension bedarf ferner einer relativ langen Zeit.

Diese drei Faktoren, nämlich neue Kontaktfläche, längere Trennungszeit und sinkende Temperatur, bringen die Gefahr mit sich, dass Verunreinigungen, insbesondere durch die entsprechende Enantiomer-Antipode, während der Aufarbeitung auskristallisieren. Denn in der bevorzugten Kristallisation ist die Antipode in der Lösung oftmals auch übersättigt, weshalb Keimbildung durch sinkende Temperatur, Kontakt mit neuen Oberflächen und/oder längerer Verweilzeit weiter angeregt wird.

Bei einem gekoppelten kontinuierlichen Prozess gibt es ein zusätzliches Problem derart, dass schwimmende feine Partikel eines Enantiomeren von einem Prozessgefäß in das andere Prozessgefäß der Antipode durch Zirkulationsströmung überführt werden könnten. Als Ergebnisse existieren in beiden Prozessgefäßen zwei unterschiedliche Enantiomer-Antipoden, was eine finale Enantiomerentrennung torpediert. In diesem Fall muss der Prozess abgebrochen werden oder ein weiterer Schritt muss sich anschließen. Nach Abbrechen kann die Aufarbeitung mit der Trennung der Kristalle von der Lösung und einem Regenerieren zum Startpunkt eine längere Zeit in Anspruch nehmen.

Derartige aus dem Stand der Technik bekannte Lösungen sind somit nicht in jeder Hinsicht zufriedenstellend und es besteht ein Bedarf an neuen Verfahren und Vorrichtungen zum Kristallisieren und Separieren von Substanzen aus einem Substanzgemisch.

Es ist daher die Aufgabe der vorliegenden Erfindung, ein verbessertes Verfahren und eine verbesserte Vorrichtung zur Kristallisation und/oder Separation von Stoffen aus einer Lösung, insbesondere von Enantiomeren aus einem racemischen Gemisch in der Lösung, bereitzustellen, welche wenigstens einen Nachteil des Stands der Technik zumindest zum Teil zu überwinden vermögen.

Die Lösung der Aufgabe erfolgt erfindungsgemäß durch ein Verfahren mit den Merkmalen des Anspruchs 1. Die Lösung der Aufgabe erfolgt erfindungsgemäß ferner durch eine Kristallisationsanordnung mit den Merkmalen des Anspruchs 10. Bevorzugte Ausgestaltungen der Erfindung sind in den Unteransprüchen, in der Beschreibung, den Beispielen und in den Figuren offenbart, wobei weitere in den Unteransprüchen oder in der Beschreibung oder den Figuren oder den Beispielen beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Die vorliegende Erfindung betrifft ein Verfahren zum Kristallisieren und Separieren einer Substanz aus einer Lösung, in welcher sich die Substanz befindet, insbesondere übersättigt gelöst ist, aufweisend die Verfahrensschritte:
a) Einbringen der die Substanz aufweisenden Lösung in ein Aufnahmevolumen eines Prozessgefäßes einer Kristallisationsanordnung, wobei die Lösung nach dem Einbringen eine Temperatur T1 aufweist;
b) Bereitstellen eines Kristallisationseinsatzes mit wenigstens einem Träger zum Einsetzen in das Prozessgefäß, wobei die Oberfläche des Trägers mit Impfkristallen für die Substanz zum Kristallwachstum derart bestückt ist, dass die Impfkristalle an der Oberfläche des Trägers des Kristallisationseinsatzes immobilisiert sind,
c) Positionieren des Kristallisationseinsatzes in einer Aufnahme der Kristallisationsvorrichtung derart, dass der Träger mit der Lösung in Kontakt bringbar ist,
d) gegebenenfalls Abkühlen der Impfkristalle unter Einstellen der Temperatur an den Impfkristallen auf eine Temperatur T2, wobei T2 geringer ist, als T1,
e) Auskristallisieren der Substanz an der Oberfläche der Impfkristalle, und
f) gegebenenfalls Isolieren der gebildeten Kristalle der Substanz in dem Prozessgefäß,
wobei wenigstens ein Träger ein spiralförmiger Träger ist.

Das hier beschriebene Kristallisationsverfahren dient somit insbesondere dazu,
eine Substanz aus einer Lösung, in welcher sich die Substanz insbesondere in Kombination mit einer oder mehreren anderen Substanzen befindet, auszukristallisieren, um die Substanz zu separieren und gegebenenfalls zu isolieren und damit insbesondere in Reinform zu erhalten. Somit kann das hier beschriebene Kristallisationsverfahren insbesondere ein Trennverfahren sein, um ein Substanzgemisch aufzutrennen.

Das hier beschriebene Verfahren umfasst die folgenden Verfahrensschritte.

Zunächst erfolgt gemäß Verfahrensschritt a) das Einbringen der die Substanz aufweisenden Lösung in ein Aufnahmevolumen eines Prozessgefäßes, das auch als Trenngefäß bezeichnet werden kann, einer Kristallisationsvorrichtung, wobei die Lösung nach dem Einfüllen in das Prozessgefäß eine Temperatur T1 aufweist. Somit wird eine Lösung in das Prozessgefäß, das als Flüssigkeitsbehälter ausgestaltet sein kann, eingebracht, wobei die Lösung die Substanz aufweist, die durch das Verfahren kristallisiert und separiert beziehungsweise bevorzugt isoliert werden soll. Beispielsweise ist die Substanz in der Lösung in einer geeigneten Konzentration gelöst, wobei die Substanz insbesondere übersättigt in der Lösung vorliegt.

Das Prozessgefäß der Kristallisationsvorrichtung ist grundsätzlich wählbar, insoweit das hier beschriebene Verfahren mit diesem durchführbar ist. Vorteilhafte Materialien umfassen insbesondere nicht oxidierende Materialien, wie etwa Glas, oder nicht oxidierende Metalle, beispielsweise Edelstahl oder emaillierte Metalle, oder Kunststoff. Grundsätzlich sollte das Material des Prozessgefäßes inert gegenüber der Lösung sein.

Ferner weist die Lösung eine Temperatur T1 auf. Diese Temperatur T1 ist vorzugsweise derart ausgewählt, dass die Substanz in der Lösung vollständig gelöst ist. Dabei kann die Lösung die Temperatur T1 bereits vor dem Einfüllen in das Prozessgefäß aufweisen, oder die Temperatur T1 kann nach dem Einbringen eingestellt werden. Jedoch sollte die Temperatur insbesondere vor dem Verfahrensschritt c) eingestellt sein.

Die Temperatur T1 der Lösung kann bevorzugt maximal 20°C, bevorzugt maximal 10°C, insbesondere bevorzugt maximal 5°C unterhalb der Sättigungstemperatur liegen. Die Sättigungstemperatur liegt dabei insbesondere bei den Bedingungen vor, in denen die Lösung vorliegt, beispielsweise also etwa 1 bar. Beispielsweise kann die Temperatur T1 die Sättigungstemperatur sein und kann die Substanz als gesättigte Lösung vorliegen.

Anschließend erfolgt gemäß Verfahrensschritt b) das Bereitstellen eines Kristallisationseinsatzes mit wenigstens einem Träger zum Einsetzen in das Prozessgefäß, wobei die Oberfläche des Trägers mit Impfkristallen für die Substanz, beispielsweise mit Impfkristallen der Substanz, zum Kristallwachstum derart bestückt ist, dass die Impfkristalle an der Oberfläche des Trägers des Kristallisationseinsatzes immobilisiert sind, und wobei wenigstens ein Träger eine Spiralform aufweist. In anderen Worten ist es erfindungsgemäß vorgesehen, dass wenigstens ein Träger ein spiralförmiger Träger ist.

Der Kristallisationseinsatz dient dazu, aus der Lösung die zu separierende Substanz zu kristallisieren derart, dass die Substanz an dem Kristallisationseinsatz kristallisiert. Hierzu ist ein Träger vorgesehen, der mit wenigstens einem beziehungsweise insbesondere mit einer Vielzahl an Impfkristallen versehen ist, welche derart an die Substanz angepasst sind, dass die Substanz an den Impfkristallen kristallisieren kann. Ferner sind der Kristallisationseinsatz und der Träger und ferner das Prozessgefäß derart ausgebildet, dass diese in dem Aufnahmevolumen, gegebenenfalls in der Flüssigkeit, die sich optional in dem Aufnahmevolumen befinden kann, positionierbar ist. Insbesondere kann die Kristallisationsanordnung mit einem Deckel für das Prozessgefäß ausgebildet sein und dieses flüssigkeitsdicht abschließen. Der Deckel kann so austauschbar sein, etwa gegen einen Filtrationseinsatz, wie dies nachfolgend näher beschrieben ist.

Beispielsweise kann der Träger Teil des Kristallisationseinsatzes oder an diesem befestigt beziehungsweise gelagert sein. Insbesondere kann der Träger beziehungsweise können Trägerteile senkrecht verlaufen.

Die Immobilisierung der Impfkristalle auf der Oberfläche der Träger kann beispielsweise durch das Beaufschlagen des Trägers mit einer Lösung der entsprechenden hochreinen Substanz erfolgen, woraus die Impfkristalle bestehen sollen. Insbesondere kann der Träger in eine entsprechende übersättigte Lösung eingetaucht werden und kann der Träger anschließend angetrocknet werden. Ferner möglich ist eine Sprühtrocknung der Lösung auf dem Träger, oder auch das Benetzen des Trägers mit einer Schmelze, wobei der Träger sowohl in eine Schmelze eingetaucht werden kann oder der Träger mit einer Schmelze besprüht oder anderweitig überzogen werden kann. Ebenso kann das Beaufschlagen des Trägers mit Impfkristallen durch das Versehen der mit Lösemittel behandelten Träger mit feinen Kristallinen des Stoffs erfolgen, mit welchem der Träger beaufschlagt werden soll, oder durch grundsätzlich jede andere geeignete Methode. Die Masse der Impfkristalle kann dabei beispielsweise durch die Dauer des Eintauchens bzw. durch die Dauer des Besprühens variiert werden.

Der Träger kann auch in die Lösung gebracht werden und die Lösung kann anschließend gekühlt werden, so dass sich Impfkristalle des Stoffs auf dem Träger bilden.

Ferner kann der Träger grundsätzlich eine wählbare Form haben welche bevorzugt derart gewählt ist, dass eine große Oberfläche bereitgestellt wird, mit welcher Impfkristalle mit der Lösung in Kontakt kommen. Darüber hinaus ist es von Vorteil, wenn der Träger mit den Impfkristallen von der Lösung durchströmbar ist, so dass eine Relativbewegung der Lösung relativ zu dem Träger möglich ist beziehungsweise die Lösung den Träger und damit die Impfkristalle umströmen kann.

Der Träger ist ein spiralförmiger Träger, wobei insbesondere eine archimedische Spiralform vorgesehen sein kann. Eine derartige Form erlaubt besonders effektiv eine über die Trennung homogene Verteilung der Impfkristalle in der Lösung, etwa wenn der Träger in dem Prozessgefäß rotiert wird beziehungsweise, wenn die Träger in dem Prozessgefäß rotiert werden oder auch, wenn der oder die Träger in dem Prozessgefäß stillstehen, was durch die Spiralform des Trägers unterstützt wird.

Darüber hinaus kann der Träger ferner vorteilhaft zumindest zum Teil aus einem Material geformt sein, das ausgewählt ist aus der Gruppe bestehend aus Metall, Kunststoff, Textil, Papier, nachwachsendem Rohstoff, Keramik, Glas und Kohlenstoff. Je nach Lösungsmittel können diese Materialien den Vorteil haben, inert gegenüber der Lösung zu sein und ferner gut dazu geeignet sein, Impfkristalle ansiedeln zu lassen.

Eine raue Oberfläche oder Oberfläche mit körnigen Substraten begünstigen das Benetzen mit der Lösung und die Bildung der Impfkristalle darauf. Für wässrige Lösungen ist die Oberfläche des Trägers mit hydrophilen Eigenschaften von Vorteil.

Grundsätzlich kann es bevorzugt sein, dass die Impfkristalle dicht und homogen fein verteilt immobilisiert sind. Dadurch kann eine schnelle und insbesondere zumindest weitestgehend vollständige Kristallisation der Substanz auf der großen Oberfläche der Impfkristalle stattfinden, was ein effektives und effizientes Verfahren ermöglichen kann, wie dies nachstehend beschrieben wird.

Entsprechend erfolgt gemäß Verfahrensschritt c) das Positionieren des Kristallisationseinsatzes in einer Aufnahme der Kristallisationsvorrichtung, wie etwa des Prozessgefäßes, derart, dass der Träger mit der Lösung in Kontakt bringbar ist. Das Zusammenbringen des Kristallisationseinsatzes beziehungsweise des Trägers und der Lösung erfolgt somit beispielsweise durch Eintauchen des Trägers in die Lösung, etwa unter Bewegung, wie etwa Rotation, des Trägers in der Lösung, kann jedoch auch durch Fließen der Lösung über den Träger erfolgen. Letzteres kann beispielsweise realisiert sein, wenn der Träger bei stillstehender Lösung sich oberhalb selbiger befindet und die Lösung beispielsweise gefördert wird, um über den Träger zu fließen.

Entsprechend ist es grundsätzlich möglich, dass die Lösung mit der Substanz zunächst in das Prozessgefäß eingefüllt wird und anschließend der Träger entsprechend positioniert wird, oder umgekehrt oder dass zunächst ein Teil der Lösung in das Prozessgefäß gefüllt wird, dann der Träger entsprechend positioniert wird und anschließend ein weiterer Teil der Lösung in das Prozessgefäß gefüllt wird. Dabei kann die Substanz nur in dem ersten Teil, nur in dem weiteren Teil oder in dem ersten Teil und dem weiteren Teil der Lösung vorliegen. Somit kann Verfahrensschritt a) zumindest zum Teil vor Verfahrensschritt c) erfolgen oder Verfahrensschritt a) kann zumindest zum Teil nach Verfahrensschritt c) erfolgen. Dabei ist es möglich, dass Verfahrensschritt a) auch vor und nach Verfahrensschritt c) erfolgt und/oder zumindest zum Teil gleichzeitig mit Verfahrensschritt c).

Bevorzugt ist der Träger beziehungsweise seine Ausdehnung in dem Flüssigkeitsvolumen derart angeordnet, dass in allen Volumenelementen der Lösung die Impfkristalle im Kristallisationseinsatz homogen, dicht, fein in der Lösung statisch verteilt sind. Dies kann dauerhaft der Fall sein, oder durch Bewegung des Trägers in dem Prozessgefäß. Je nach der übersättigten Konzentration, können in jeden einzelnen Volumenelementen von 1cm³ Impfkristalle in Vielzahl statisch vorhanden sein. Grundsätzlich kann eine mit Impfkristallen versehene Oberfläche, also eine Kristallisationsoberfläche, in einem Bereich von 0,5 cm² bis 5 cm² je 1 cm³ des Aufnahmevolumens am Kristallisationseinsatz zur raschen Kristallisation zumindest in einem Teil des Aufnahmevolumens vorliegen. Dabei kann es möglich sein, dass der Träger in jedem Volumen des Aufnahmegefäßes eine entsprechende Kristallisationsoberfläche aufweist, oder es können auch Bereiche in dem Aufnahmevolumen vorliegen, in welchen die vorbeschriebene Kristallisationsoberfläche nicht realisiert ist. Entsprechend kann es bevorzugt sein, dass eine Kristallisationsoberfläche von 0,5 cm² bis 5 cm² je 1 cm³ des Aufnahmevolumens zumindest in einem Teil des Aufnahmevolumens vorliegt.

Die Moleküle können sich in einem ruhigen Medium durch Diffusion ohne äußere Einflüsse schneller und besser durch Van der Waals Kraft an die Oberfläche der Impfkristalle zuordnen, als in einer strömenden Lösung. Entsprechend kann es bevorzugt sein, dass die Lösung zum Auskristallisieren stillsteht. Dies ist aber, wie an anderer Stelle beschrieben in keiner Weise zwingend.

Weiterhin kann bei dem hier beschriebenen Kristallisationsverfahren gemäß Schritt d) gegebenenfalls ein Abkühlen der Impfkristalle unter Einstellen der Temperatur an den Impfkristallen auf eine Temperatur T2 erfolgen, wobei T2 geringer ist, als T1. In anderen Worten wird der Kristallisationseinsatz beziehungsweise der Träger mit dem Impfkristallen derart temperiert, dass die Temperatur an den Impfkristallen eine geringere Temperatur aufweist, als die Lösung unmittelbar nach Verfahrensschritt a).

Bevorzugt kann die Temperatur T2 der Impfkristalle gleich oder maximal 5 °C geringer sein als die Temperatur T1 der insbesondere übersättigten Lösung beziehungsweise der hinsichtlich der Substanz abgereicherten Lösung. Hierzu kann die in dem Prozessgefäß sich befindende Lösung temperierbar sein, wozu an sich bekannte Temperiermittel verwendet werden können. Grundsätzlich kann die Temperatur T2 bevorzugt maximal 20°C, bevorzugt maximal 10°C, insbesondere bevorzugt maximal 5°C unterhalb der Temperatur T1 liegen.

Dies kann insbesondere realisierbar sein durch unmittelbares Temperieren des Kristallisationseinsatzes beziehungsweise des Trägers. Somit weist der Kristallisationseinsatz beziehungsweise der Träger bevorzugt eine Temperiereinheit auf, mittels der die Impfkristalle geheizt und/oder gekühlt werden können. Dadurch wird es möglich, dass der Kristallisationseinsatz beziehungsweise der Träger unmittelbar temperiert wird und das insbesondere unabhängig von einer Temperierung der Lösung.

Es ist jedoch ebenfalls im Rahmen der Erfindung möglich, die Lösung zu temperieren, um so auch den Träger beziehungsweise die Impfkristalle zu temperieren. Grundsätzlich kann es jedoch bevorzugt sein, dass die Temperatur der Impfkristalle geringer ist, als die der Lösung.

Aus den vorbeschriebenen Verfahrensschritten folgend erfolgt dann gemäß Schritt e) eine Auskristallisation der Substanz an den Impfkristallen beziehungsweise an deren Oberfläche und damit an dem Träger. Denn etwa durch die wie vorstehend spezifizierte Temperatursteuerung kann die in der Lösung gelöste Substanz mit dem vergleichsweise kalten Träger beziehungsweise mit den vergleichsweise kalten Impfkristallen in Kontakt kommen und so kristallisierend ausfallen. Dabei wachsen die Kristalle an dem Träger an, so dass die Lösung hinsichtlich der Substanz verdünnt beziehungsweise entreichert wird.

Dadurch, dass die Impfkristalle und folgend auch die auskristallisierte Substanz an dem Träger immobilisiert sind, kann anschließend die Substanz vorteilhaft isoliert werden. Insbesondere kann die Substanz somit vom Träger entfernt werden und in hochreiner Form gewonnen werden.

Hierzu ist es gemäß Verfahrensschritt f) gegebenenfalls vorgesehen, dass die gebildeten Kristalle der Substanz in dem Prozessgefäß isoliert werden. Somit kann es ermöglicht werden, dass, wie dies nachstehend in größerem Detail beschrieben ist, ein Prozessgefäß verwendet wird, in dem aus der Lösung durch entsprechende Verfahrensschritte hochreine Kristalle der Substanz geformt werden.

Das beschriebene Verfahren erlaubt auf effektive Weise, Substanzen gezielt aus einer Lösung und damit einem Substanzgemisch zu entfernen und diese somit zu separieren beziehungsweise zu isolieren. Denn beispielsweise durch die Möglichkeit der gezielten Temperatursteuerung kann in definierter und reproduzierbarer Weise die Substanz aus der Lösung isoliert werden. Dies ist dabei derart möglich, dass die Substanz möglichst vollständig isoliert wird, etwa durch das Einstellen einer sehr niedrigen Temperatur. Alternativ ist es auch möglich, Substanzen nur in begrenztem Maße zu kristallisieren, etwa indem die Temperatur vergleichsweise hoch gewählt wird. Dadurch können stets geeignete Bedingungen geschaffen werden, welche eine gewünschte Kristallisation erlauben.

Darüber hinaus ist das Verfahren in einem hohen Maße an die zu isolierende Substanz anpassbar, indem jeweils Träger mir geeigneten Impfkristallen und entsprechende Temperaturen verwendet werden. Dadurch können ohne größere Umbauten und nur mit geringen Modifikationen unterschiedlichste Substanzen gezielt und effektiv aus einer Lösung isoliert werden.

Die Anpassbarkeit kann noch weiter dadurch verbessert werden, dass durch die Temperierbarkeit des Trägers beziehungsweise der Impfkristalle ein an die jeweilige zu isolierende Substanz jeweils geeignete Temperaturführung möglich ist.

Ferner kann die Verfahrensführung sehr anpassbar gestaltet werden, indem das Verfahren kontinuierlich oder batchweise durchgeführt wird, wie dies an späterer Stelle in größerem Detail beschrieben ist.

Für nicht racemische Trennung besteht keine Gefahr der Kristallisation der Antipode. Die Lösung kann daher unter stetiger Temperaturabsenkung langsam, vorzugsweise homogen abgekühlt werden, wobei aus der übersättigten Lösung eine kontrollierte Kristallisation an den Impfkristallen stattfindet. Ein homogenes Abkühlen ist bevorzugt dadurch gekennzeichnet, dass in der gesamten Lösung die Temperaturabweichung höchstens 1°C beträgt. Die Kristallisation an den Trägern kann beispielsweise durch eine Ostwald-Reifung erfolgen. Dabei wird die Kristallisation insbesondere durch eine Temperaturänderung der Lösung unterstützt. Bevorzugt wird die Lösung dazu derart erwärmt, dass sich eine Temperaturänderung der Lösung schnell und kurz um maximal 2°C erhöht wird, wobei eventuell kleine kristalline Partikel an Boden und/oder an der Wand des Prozessgefäßes in Lösung gebracht werden und sich deren Substanz bevorzugt an größeren kristallinen Partikeln auf den Trägern anlagert. Am Ende kristallisiert die Substanz in homogener Kristallitgröße vollständig aus der Lösung. Dies ermöglicht sehr hohe Ausbeuten, beispielsweise in einem Bereich von mindestens 95 Gew.-%, bevorzugt von mindestens 99 Gew.-%, bezogen auf die theoretische Ausbeute der ursprünglich in der Lösung vorhandenen beziehungsweise gelösten Substanz.

Durch eine Aufarbeitung bis hin zum isolierten Kristall kann ferner ein sehr einfacher Aufbau gewählt werden und die Gefahr einer Kontamination der erhaltenen Kristalle kann minimiert werden. Daher kann durch das hier beschriebene Verfahren eine hochreine Substanz geschaffen werden, was für vielerlei Anwendungen von zentraler Bedeutung ist.

Um die Kristalle zu isolieren und damit, wenn Verfahrensschritt f) umgesetzt wird, kann das Verfahren den weiteren Verfahrensschritt aufweisen:
f1) Ablösen von an den Impfkristallen kristallisierter Substanz von dem Träger innerhalb des Prozessgefäßes.

Der Verfahrensschritt f1) dient dabei der Isolierung der gebildeten Kristalle und dient insbesondere dazu, die Kristalle in freier Form vorliegen zu haben, damit weitere Verfahrensschritte sich anschließen können und ein besonders effektives Aufreinigen ermöglichen können.

Hierzu kann beispielsweise ein Abstreifer vorgesehen sein, wobei zwischen dem Träger und dem Abstreifer eine Relativbewegung möglich ist, um die Kristalle mechanisch zu lösen. In diesem Fall verbleiben die Kristalle zunächst in der Lösung und können anschließend von der Lösung entfernt werden und die Isolierung kann fortgesetzt werden. Andere Möglichkeiten, die Kristalle von dem Träger zu entfernen, sind allerdings ebenfalls von der vorliegenden Erfindung umfasst. Beispielsweise können die Kristalle von dem Träger gelöst werden, indem das Prozessgefäß etwa nach Trennung der freien Lösungsmasse beziehungsweise des freien Lösungsmittels zentrifugiert wird, wobei sich die Kristalle durch die Zentrifugalkraft lösen, gleichzeitig die an Kristallinen anhaftende Lösungsreste aus dem Prozessgefäß getrennt werden.

Somit kann das Verfahren beim Realisieren des Verfahrensschritts f) die weiteren Verfahrensschritte umfassen:
f1) Ablösen von an den Impfkristallen kristallisierter Substanz von dem Träger innerhalb des Prozessgefäßes; und
f2) Entfernen von Lösung von den gebildeten Kristallen;
f3) gegebenenfalls Reinigen der gebildeten Kristalle; und
f4) Trocknen der Kristalle.

Um die Lösung von den gebildeten Kristallen zu entfernen kann es beispielsweise vorgesehen sein, dass die produzierten Kristalle ohne einen Filter von der Masse der freien Lösung durch Abführen der Lösung aus dem Prozessgefäß oder gegebenenfalls Herausnehmen des Kristallisationseinsatzes, und Dekantieren der Lösung aus dem Prozessgefäß, getrennt werden.

Hierzu kann beispielsweise das Prozessgefäß mit oder ohne Träger zentrifugiert werden. Die den Kristallen überstehende Lösung kann dann entfernt werden und gegebenenfalls unter Zugabe weiteren Lösungsmittels kann ein Zentrifugieren wiederholt werden. So können die Kristalle gereinigt werden. Entsprechend kann wenigstens einer der Verfahrensschritte f2) und f3) ein Zentrifugieren der Lösung in dem Prozessgefäß umfassen.

Besonders bevorzugt kann es jedoch vorgesehen sein, dass wenigstens einer der Verfahrensschritte f2) und f3) ein Filtrieren der Lösung mitsamt in der Lösung befindlicher Kristalle zum Sammeln der Kristalle auf dem Filter insbesondere im Prozessgefäß umfasst,
wobei der Filter bevorzugt in oder an dem Prozessgefäß angeordnet sein kann. Dadurch kann die Lösung aus dem Prozessgefäß dekantiert werden und die Kristalle können gleichermaßen in dem Prozessgefäß verbleiben. Beispielsweise kann der Filter an oder in einem Auslass des Prozessgefäßes angeordnet sein.

Grundsätzlich ist es jedoch auch möglich, dass beispielsweise die Überstehende Lösung, etwa mittels einer Spritze, abgezogen wird. Dies kann sowohl bei einem erstmaligen Entfernen der Lösung, als auch während eines Wasch- beziehungsweise Reinigungsvorgangs entsprechend erfolgen.

Anschließend kann sich ein Trocknen der Kristalle anschließen, so dass die Kristalle anschließend isoliert sein können. Ein Trocknen der Kristalle kann etwa mit einem insbesondere hochreinen Gasstrom oder auch unter Verwendung eines Vakuums möglich sein.

Ein Abtrennen der Kristalle von dem Träger kann auch durch ein Zentrifugieren realisiert werden, so dass zum Abtrennen der Kristalle und zum Reinigen der Kristalle der gleiche Aufbau möglich ist.

Grundsätzlich kann somit wenigstens einer, beispielsweise beide, der Verfahrensschritte f2) und f3) wenigstens eines von einem Zentrifugieren und einem Filtrieren umfassen. Beispielsweise können beide der Verfahrensschritte f2) und f3) ein Zentrifugieren und ein Filtrieren umfassen. Hierdurch kann die Verfahrensführung vereinfacht werden und es kann trotzdem ein sehr effektives Reinigen der Kristalle und damit ein Erhalten von hochreinen Kristallen ermöglicht werden.

Nach der Kristallisation können die produzierten Kristalle in sehr kurzer Zeit von beispielsweise 90% des Lösungsmittels beziehungsweise der freien Lösungsmasse getrennt werden, etwa durch Dekantieren oder Auslassen der Lösung oder Herausnehmen des Kristallisationseinsatzes. Dies ist möglich deutlich schneller als bei den Verfahren des Stands der Technik und kann die Gefahr einer Kontamination der Mutterlauge reduzieren. In diesem Schritt kann somit die Lösung aus dem Prozessgefäß entnommen werden, wenn die gebildeten Kristalle an den Impfkristallen immobilisiert sind, also ohne ein Zentrifugieren und/oder Filtrieren.

Beispielsweise kann ein Verfahren durchgeführt werden, indem es die Verfahrensschritte aufweist:
f1) Ablösen von an den Impfkristallen kristallisierter Substanz von dem Träger innerhalb des Prozessgefäßes; und
f2) Entfernen von Lösung von den gebildeten Kristallen;
f3) gegebenenfalls Reinigen der gebildeten Kristalle; und
f4) Trocknen der Kristalle, wobei
beide der Verfahrensschritte f2) und f3) ein Filtrieren der Lösung mitsamt in der Lösung befindlicher Kristalle zum Sammeln der Kristalle auf dem Filter im Prozessgefäß umfasst,
wobei der Filter in oder an einer Öffnung des Prozessgefäßes angeordnet ist, wobei auf dem dem Aufnahmevolumen entgegengesetzten Seite des Filters ein Auffanggefäß zum Auffangen der Lösung beziehungsweise Mutterlauge vorgesehen ist, und wobei
beide der Verfahrensschritte f2) und f3) ein Zentrifugieren der Lösung in dem Prozessgefäß umfasst.

In einer Ausgestaltung kann für ein Separieren eine Anordnung aus einem Prozessgefäß,
einem Auffanggefäß und einer einen Filter aufweisenden Filtereinheit verwendet wird, wobei das Prozessgefäß und das Auffanggefäß fluiddicht an der Filtereinheit befestigt und durch den Filter fluidisch miteinander verbunden sind derart, dass Lösung von dem Prozessgefäß in das Auffanggefäß unter Vakuum oder Zentrifugalkraft durch den Filter filtriert wird, wobei
Feststoff durch den Filter in dem Prozessgefäß zurückgehalten und von der Lösung getrennt wird.

Bevorzugt kann das Verfahren eine Enantiomerentrennung sein, wobei die Substanz ein Enantiomer eines racemischen Gemischs, insbesondere eines konglomeratbildenden Stoffsystems, ist und die Lösung das racemische Gemisch aufweist, insbesondere als übersättigte Lösung des Racemats. In dieser Ausgestaltung kann das hier beschriebene Verfahren somit insbesondere dazu verwendet werden, ein Racemat, insbesondere ein konglomeratbildendes Stoffsystem, aufzutrennen. Dies ist für viele technische Verfahren von Vorteil, da bei chemischen Reaktionen gegebenenfalls Racemate anfallen, jedoch oftmals nur ein isoliertes Enantiomer des Racemats beziehungsweise des Enantiomerengemisches benötigt wird. Insbesondere für eine Enantiomerentrennung kann das hier beschriebene Kristallisationsverfahren von großem Vorteil sein, da insbesondere Konglomerate eines Enantiomerengemisches sich oftmals durch Kristallisationsprozesse trennen lassen.

Um ein Enantiomer zu isolieren kann es ausreichend sein, den Träger jeweils mit einem Impfkristall zu verwenden, so dass das das gewünschte Enantiomer kristallisiert und isoliert werden kann, das anderem nicht gewünschte Enantiomer jedoch in Lösung bleibt.

Insoweit beide Enantiomere isoliert werden sollen, kann mit unterschiedlichen Trägern beziehungsweise mit unterschiedlichen Impfkristallen der Enantiomeren gearbeitet werden, etwa indem nacheinander unterschiedliche Träger in einem Batchverfahren in einem Prozessgefäß durch Austausch des Kristallisationseinsatzes oder auch in einem kontinuierlichen Prozess durch Hintereinanderschalten unterschiedlicher und miteinander verbundener beziehungsweise gekoppelter Prozessgefäße mit unterschiedlich bestückten Kristallisationseinsätzen verwendet werden. Für die Trennung und Isolation zweier Enantiomere aus einer racemischen Mischung, wie insbesondere eines konglomeratbildenden Stoffsystems, wird der Träger eines ersten Kristallisationseinsatzes beispielsweise mit dem Impfkristall des ersten Enantiomers beaufschlagt, der Träger des zweiten Kristallisationseinsatzes mit dem Impfkristall des zweiten Enantiomers. Dies ist nachstehend in größerem Detail beschrieben.

Für eine Enantiomerentrennung eines racemischen Gemischs, insbesondere eines konglomeratbildenden Systems, ist die isotherme Kristallisation bevorzugt. Die Kristallisationszeit in Batchprozess und die Verweilzeit in kontinuierlichen Prozess sind vom Übersättigungsgrad abhängig. Die Verweilzeit beträgt bevorzugt maximal 90 Minuten, etwa maximal 60 Minuten, besonders bevorzugt maximal 30 Minuten. Dadurch kann ein Enantiomerenüberschuss von über 90%, bevorzugt über 95%, insbesondere bevorzugt über 99% erzielt werden.

Die ideale Verweilzeit für eine optimale Trennung für die Spaltung von Racematen kann punktgenau durch Messen des Drehwerts der Lösung im Prozess bestimmt werden, wobei beim Wendepunkt des Drehwerts die Kristalline auf Träger von der Lösung schnell getrennt werden können.

Hinsichtlich der Kristallisationstemperatur, die in Verfahrensschritt d) eingestellt wird, ist zu beachten, dass diese derart gewählt werden sollte, dass nur das gewünschte Enantiomer an den Impfkristallen auskristallisiert, die Antipode jedoch in Lösung bleibt.

Es kann weiterhin bevorzugt sein, dass die Verfahrensschritte a) bis e) als gemeinsame Sequenz sich wiederholend in einem Prozessgefäß ausgeführt werden, wobei zwischen zwei sich wiederholenden Sequenzen der Kristallisationseinsatz des Prozessgefäßes ausgetauscht wird, wobei bei einer ersten Sequenz der Träger eine erste Art an Impfkristallen aufweist und wobei bei einer zweiten Sequenz der Träger eine von der ersten Art verschiedene zweite Art an Impfkristallen aufweist.

In dieser Ausgestaltung kann somit mehr als eine Substanz aus der Lösung isoliert werden. Es wird so möglich, beispielsweise aus einem Gemisch gelöster Substanzen, eine Trennung derart durchzuführen, dass die jeweils gelösten Substanzen individuell in kristallisierter Form isoliert werden. Dies kann realisiert werden, indem der Träger oder auch unterschiedliche nacheinander verwendete Träger jeweils mit zueinander verschiedenen Impfkristallen bestückt werden, an welchen jeweils selektiv die zu isolierende Substanz auskristallisiert.

Dabei kann diese Ausgestaltung insbesondere ein sogenanntes Batch-Verfahren ausbilden.

Alternativ oder zusätzlich ist es auch möglich, eine Auftrennung verschiedener Substanzen aus der Lösung in einem kontinuierlichen Verfahren durchzuführen. In diesem Fall können die Verfahrensschritte a) bis e) als gemeinsame Sequenz sich wiederholend in verschiedenen Prozessgefäßen ausgeführt werden, wobei der Träger eines ersten Prozessgefäßes eine erste Art von Impfkristallen aufweist und wobei der Träger eines zweiten insbesondere stromabwärts des ersten Prozessgefäßes geschalteten und mit dem ersten Prozessgefäß durch eine Fluidverbindung verbundenen beziehungsweise gekoppelten zweiten Prozessgefäßes eine von der ersten Art verschiedene zweite Art an Impfkristallen aufweist,

Somit wird die Lösung zunächst in ein erstes Prozessgefäß gefördert und kann dort etwa verweilen, bis eine gewünschte Menge einer ersten Substanz an dem im ersten Flüssigkeitsbehälter befindlichen Träger beziehungsweise dessen Impfkristallen auskristallisiert. Anschließend kann die insbesondere hinsichtlich der zweiten Substanz übersättigte Lösung in ein zweites Prozessgefäß gefördert werden, wo ein Träger mit einem anderen Impfkristall vorgesehen ist. Auch hier kann die Lösung wiederum verweilen, bis eine gewünschte Menge einer zweiten Substanz an dem im ersten Prozessgefäß befindlichen Träger beziehungsweise dessen Impfkristallen auskristallisiert. Dies kann etwa kontinuierlich in einer einstellbaren Fließgeschwindigkeit realisiert werden.

Somit ist es in dieser Ausgestaltung insbesondere vorgesehen, dass die Ableitung eines ersten Prozessgefäßes mit der Zuleitung eines zweiten Prozessgefäßes verbunden ist und die Prozessgefäße so miteinander gekoppelt sind. In der Verbindung zwischen erstem und zweitem Prozessgefäß kann ein oder eine Mehrzahl weiterer Prozessgefäße vorgesehen sein, in welche eine gesättigte Substanzgemisch-Lösung eingebracht werden kann.

Grundsätzlich werden somit wenigstens zwei gekoppelte Prozessgefäße gleichzeitig und kontinuierlich betrieben, wobei in beiden Prozessgefäßen unterschiedliche Impfkristalle etwa der Enantiomer-Antipoden eines Racemates an dem Träger immobilisiert sind.

Somit lassen sich auf effektive und leichtdurchzuführende Weise Lösungsgemische auftrennen. Dabei können sowohl bei einem Batch-Verfahren, als auch bei einem kontinuierlichen Verfahren zwei unterschiedliche Substanzen isoliert werden, oder es können mehr als zwei Substanzen isoliert werden, wenn eine größere Anzahl an Trägern verwendet wird.

Vorteil eines kontinuierlichen Prozesses ist es weiterhin, dass es keine oder nur eine sehr geringe Gefahr gibt, dass die beiden Prozessgefäße voneinander kontaminiert wird, da keine fein Kristallpartikel in der Lösung schwimmen. Die Gefahr kann durch das Vorsehen eines Filters weiter verringert werden.

In einer beispielhaften Ausgestaltung kann das Verfahren wie folgt ablaufen, wobei sämtliche der nachfolgenden Schritte beziehungsweise Teilschritte auch in Alleinstellung beziehungsweise in Kombination mit anderen Schritten Bestandteil des Verfahrens sein können:
A) Die von gebildeten Kristallen freie Lösung wird aus dem Prozessgefäß abgeführt, beispielsweise durch wenigstens eines von
   A1) Dekantieren durch einen Auslass des Prozessgefäßes, insbesondere mit eingesetztem Kristallisationseinsatz,
   A2) Herausnehmen des Kristallisationseinsatzes und Dekantieren der Lösung durch eine hierdurch freiwerdende Öffnung;
   A3a) Zentrifugieren des Prozessgefäßes mit Kristallisationseinsatz und gegebenenfalls Vakuumanwendung an das Prozessgefäß; wobei das Prozessgefäß, dessen Deckel mit einem Filtereinsatz mit Filterscheibe ausgestattet ist oder ausgestattet wird, dicht verschlossen wird, und wobei bei einem Zentrifugieren das Prozessgefäß mit Öffnung nach unten in eine Zentrifuge eingesetzt und zentrifugiert wird, wodurch sich gleichermaßen die Kristalle durch Zentrifugalkraft vom Kristallisationseinsatz ablösen, und die Kristalle von anhaftender Lösung befreit wird, indem die Lösung durch den Filter läuft; wobei
   A3b) gegebenenfalls eine Anordnung bei dem Zentrifugieren verwendet wird, wobei die Anordnung aus dem Prozessgefäß, einem Auffanggefäß und einer Filtereinheit mit einem Filter, wobei das Prozessgefäß und das Auffanggefäß fluiddicht an der Filtereinheit befestigt und durch den Filter fluidisch miteinander verbunden sind derart, dass Lösung von dem Prozessgefäß in das Auffanggefäß unter Vakuum oder Zentrifugalkraft durch den Filter filtrierbar ist, wobei Feststoff durch den Filter in dem Prozessgefäß zurückgehalten und von der Lösung getrennt wird.
B) Die Kristalle werden gegebenenfalls in einem weiteren Schritt von dem Kristallisationseinsatz entfernt.
C) Der von Kristallen befreiten Kristallisationseinsatz kann aus dem Prozessgefäß entfernt werden.
D) Die Kristalle werden in dem selben Prozessgefäß gewaschen und getrocknet.

Hinsichtlich weiterer technischer Merkmale und Vorteile des Verfahrens wird hiermit auf die Beschreibung der Kristallisationsanordnung, der Verwendung, der Anordnung die Beispiele, die Figuren und die Beschreibung der Figuren verwiesen, und umgekehrt.

Beschrieben wird ferner eine Kristallisationsanordnung zum Kristallisieren wenigstens einer Substanz aus einer Lösung, insbesondere zum Durchführen eines Verfahrens wie vorstehend beschrieben, aufweisend ein Prozessgefäß zum Aufnehmen der Lösung und aufweisend einen Kristallisationseinsatz mit wenigstens einem Träger zum Einsetzen in das Prozessgefäß, wobei die Oberfläche des Trägers mit Impfkristallen für die Substanz zum Kristallwachstum derart bestückt ist, dass die Impfkristalle an der Oberfläche des Trägers des Kristallisationseinsatzes immobilisiert sind, und wobei wenigstens ein Träger ein spiralförmiger Täger ist, wobei das Prozessgefäß eine Aufnahme zum Aufnehmen des Kristallisationseinsatzes mit dem Träger aufweist, wobei der Kristallisationseinsatz zerstörungsfrei von der Aufnahme lösbar ist und wobei der Kristallisationseinsatz ferner derart in der Aufnahme positionierbar ist, dass die Impfkristalle mit der Lösung in Kontakt bringbar sind.

Mit einer derartigen Kristallisationsvorrichtung kann insbesondere ein beschriebenes Kristallisationsverfahren ausgeführt werden und sie dient somit insbesondere zum Kristallisieren wenigstens einer Substanz aus einer Lösung.

Hierzu umfasst die Kristallisationsanordnung ein Prozessgefäß zum Aufnehmen der Lösung, in welcher sich die Substanz befindet. Das Prozessgefäß der Kristallisationsanordnung ist grundsätzlich wählbar, insoweit das hier beschriebene Verfahren mit diesem durchführbar ist. Vorteilhafte Materialien umfassen insbesondere nicht oxidierende Materialien, wie etwa Glas oder Kunststoffe, oder nicht oxidierende Metalle, beispielsweise Edelstahl oder emaillierte Metalle. Grundsätzlich sollte das Material des Prozessgefäßes und jeglicher weiterer mit der Lösung in Kontakt kommender Bauteile inert gegenüber der Lösung und insbesondere der Substanz sein.

Weiterhin umfasst die Kristallisationsanordnung einen Kristallisationseinsatz mit wenigstens einem Träger zum Einsetzen in das Prozessgefäß, wobei die Oberfläche des Trägers mit Impfkristallen für die Substanz zum Kristallwachstum derart bestückt ist, dass die Impfkristalle an der Oberfläche des Trägers des Kristallisationseinsatzes immobilisiert sind.

Somit ist der Träger beziehungsweise sind die Impfkristalle vorteilhaft an das durchzuführende Verfahren beziehungsweise an die zu isolierende Substanz angepasst. Ein derartiger Träger kann insbesondere ausgestaltet sein und hergestellt werden, wie dies vorstehend mit Bezug auf das Verfahren beschrieben ist und die Impfkristalle können ferner derart immobilisiert sein, dass auf dem Träger kristallisierte Substanz von dem Träger bei weiterhin immobilisierten Impfkristallen gelöst werden können.

Besonders bevorzugt weist der Träger eine Spiralform auf, wobei insbesondere eine archimedische Spiralform vorgesehen sein kann. Eine derartige Form erlaubt besonders effektiv eine über die Trennung homogene Verteilung der Impfkristalle in der Lösung, etwa wenn der Träger in dem Prozessgefäß rotiert wird beziehungsweise, wenn die Träger in dem Prozessgefäß rotiert werden, oder auch wenn der Träger in dem Prozessgefäß feststeht, wobei letzteres durch die Spiralform unterstützt werden kann.

Besonders bevorzugt ist der Träger in beispielsweise archimedischer Spiralform ausgestaltet, etwa aus Hartfolie, wobei die Abstände der Spiralform zueinander, also der jeweiligen Windungsbereiche, kleiner als 2 cm, bevorzugt kleiner als 1 cm, insbesondere bevorzugt kleiner als 0,5 cm sind. Unter einer Hartfolie kann ferner eine Folie verstanden werden, welche derart stabil ist, dass die Spiralform unter der Verfahrenstemperatur und beim Tragen der Kristalline auf den Oberflächen ihre Form beibehält, auch etwa wenn die Spiralform leer ohne äußere Einflüsse frei steht.

Alternativ oder zusätzlich kann es bevorzugt sein, dass der Träger als Folie oder Gewebe ausgestaltet ist, wobei die Folie oder das Gewebe vorzugsweise mit Durchtrittsöffnungen versehen ist. Diese Ausgestaltung erlaubt eine effektive Umströmung von an dem Träger immobilisierten Impfkristallen mit der Lösung, so dass ein besonders effektives Auskristallisieren der Substanz aus der Lösung ermöglicht wird.

Hinsichtlich einer Positionierung des Kristallisationseinsatzes weist das Prozessgefäß eine Aufnahme zum Aufnehmen des Kristallisationseinsatzes mit dem Träger auf. Der Träger ist ferner zerstörungsfrei von der Aufnahme lösbar, was eine bevorzugte Anwendbarkeit ermöglicht, dass das Prozessgefäß und der Träger mehrfach nutzbar sind. Die Aufnahme kann eine definierte Position des Kristallisationseinsatzes ermöglichen und ferner sicherstellen, dass der Kristallisationseinsatz stabil befestigt ist.

Weiterhin ist der Träger derart in der Aufnahme positioniert beziehungsweise positionierbar, dass die Impfkristalle mit der Lösung in Kontakt bringbar sind. Ein In-Kontakt-bringen kann dabei sowohl ein Eintauchen des Trägers in die Lösung bedeuten, als auch ein mögliches Übergießen oder auch ein Eintauchen des Trägers in die Lösung, wie dies Vorstehend mit Bezug auf das Verfahren in größerem Detail beschrieben ist.

Ferner ist es bevorzugt vorgesehen, dass eine Temperiereinheit zum direkten oder indirekten Temperieren des Trägers und damit der Impfkristalle vorgesehen ist. Beispielsweise kann in dem Prozessgefäß befindliche Lösung temperierbar sein, wobei der Träger beziehungsweise die Impfkristalle somit indirekt temperierbar sind.

Für ein direktes Temperieren des Trägers kann dieser beispielsweise einen oder mehrere Kanäle aufweisen, durch welche ein entsprechendes insbesondere flüssiges Temperiermittel geführt werden kann, um so den Träger zu temperieren, insbesondere zu kühlen. In diesem Fall kann der Kanal oder können die Kanäle mit einer Kühl- und/oder Heizeinheit verbunden sein, welche das Temperiermittel auf eine Temperatur einstellt, mittels der der Träger wie gewünscht temperiert werden kann beziehungsweise, dass die Temperatur des Trägers und damit von Impfkristallen, die an dem Träger zum Kristallwachstum der Substanz immobilisiert sind, definiert einstallbar ist.

Beispielsweise sind insbesondere die Lösung in dem Behälter und/oder der Träger getrennt voneinander temperierbar.

Bei der hier beschriebenen Kristallisationsanordnung kann es ferner in einer Ausgestaltung vorgesehen sein, dass die Kristallisationsanordnung einen Filter zum Filtrieren von in dem Prozessgefäß vorliegender Lösung aufweist, oder dass die Kristallisationsanordnung eine Zentrifuge zum Zentrifugieren des Prozessgefäßes aufweist. Beispielsweise kann es vorteilhaft sein, wenn das Prozessgefäß einen Filter zum Filtrieren von in dem Prozessgefäß vorliegender Lösung aufweist, und wenn die Kristallisationsanordnung eine Zentrifuge zum Zentrifugieren des Prozessgefäßes aufweist.

Hinsichtlich des Filters kann dieser etwa an einem Flüssigkeitsausgang des Prozessgefäßes positioniert sein. Durch diesen Filter kann es verhindert werden, dass aus dem Flüssigkeitsausgang ausgetragene Lösung gebildete Kristalle mitreißt, welche dann potentiell verloren gehen würden oder weiter isoliert werden müssten. Dies kann unabhängig davon sein, ob die Lösung etwa verklappt wird, in den Behälter zurückgeführt oder einem weiteren Träger in einem gekoppelten Prozessgefäß zugeführt wird. Somit dient der Filter insbesondere dazu, die Kristalle von der Lösung zu trennen und entsprechend dem Isolieren der Kristalle.

Der Filter beziehungsweise Filtrationseinsatz ist somit für das Durchlaufen des flüssigen Mediums und das Zurückhalten der produzierten Kristalle ausgebildet. Er kann als Filtrationsscheibe, oder Filtersieb, oder Filtergewebe, oder Filterfolie oder Filterpapier, oder andere dem Fachmann bekannte Materialien ausgebildet sein, die eine solche Funktion haben. Die Maschenweite kann anhand der gewünschten zu erhaltenen Kristallgröße gewählt werden.

Beispielsweise kann nach dem Entfernen der freien Lösungsmasse der Deckel des Prozessgefäßes mit einer Filtereinheit ausgestattet und der Behälter wie eine übliche Zentrifugenflasche an eine Zentrifuge positioniert werden, allerdings mit der Öffnung nach unten, damit die angehafteten Lösungsmittelrest durch den Filter aus dem Behälter zentrifugiert werden. Die produzierten Kristalline werden dabei durch die Zentrifugalraft von dem Träger abgelöst.

Auch die Zentrifuge kann dem Isolieren der Kristalle in dem Prozessgefäß dienen, Diesbezüglich sei erwähnt, dass der Behälter an die Zentrifuge anschließbar sein kann. Beispielsweise kann das Prozessgefäß zylinderförmig ausgestaltet sein und/oder eine Weithalsöffnung aufweisen, insbesondere an der der Filter angeordnet ist und an dem etwa die Zentrifuge oder eine Vakuumpumpe, wie nachfolgend beschrieben angeordnet werden kann.

Durch das Zentrifugieren können beispielsweise die Kristalle von dem Träger beziehungsweise von den Impfkristallen gelöst werden oder es kann die überstehende Lösung aus dem Prozessgefäß entfernt werden. Dies ohne oder bevorzugt mit einem Filter. Dabei kann es weiterhin von Vorteil sein, dass in dem Prozessgefäß ein Sammelvolumen zum Sammeln von Kristallen vorgesehen ist, die sich bei einem Zentrifugieren des Prozessgefäßes absetzen. In dieser Ausgestaltung kann die Lösung mitsamt von dem Träger gelösten Kristallen zentrifugiert werden, um so die Kristalle von der Lösung zu trennen. Beispielsweise kann das Sammelvolumen ein Bereich mit einem reduzierten Durchmesser sein, etwa ein V-förmig zulaufender Bereich. Beispielsweise kann die Lösung durch das Zentrifugieren durch den Filter ausgetragen werden.

Weiter bevorzugt kann die Kristallisationsanordnung wenigstens eines von einer Vakuumpumpe und einer Schutzgasquelle aufweisen, wobei das Prozessgefäß derart mit der Schutzgasquelle oder der Vakuumpumpe verbindbar ist, dass durch das Prozessgefäß ein Schutzgasstrom geführt werden kann oder dass in dem Prozessgefäß ein Vakuum anlegbar ist. In dieser Ausgestaltung kann ein besonders vorteilhaftes Trocknen der entstandenen Kristalle ermöglicht werden, da etwa an den Kristallen anhaftendes Lösungsmittel von einem durch das Prozessgefäß geleiteten Schutzgasstrom mitgerissen werden kann. Ferner kann das Lösungsmittel durch das Vakuum verdampfen.

Unter Schutzgas soll im Sinne der vorliegenden Erfindung ein Gas verstand werden, welches mit der auskristallisierten Substanz nicht reagiert, diesbezüglich somit inert ist, beispielsweise Argon oder Stickstoff.

Dabei kann der Ausgang des Schutzgasstroms beziehungsweise der Anschluss der Vakuumpumpe bevorzugt an dem Filter des Prozessgefäßes angeordnet sein, da so verhindert werden kann, dass gebildete Kristalle aus dem Prozessgefäß ausgetragen werden.

Ferner kann es vorteilhaft sein, dass eine Mischvorrichtung zum Mischen der Lösung in dem Prozessgefäß vorgesehen ist. Eine derartige Vorrichtung kann insbesondere ein Rührwerk sein oder auch eine Vorrichtung zum Eintragen von Wellen, etwa von Schallwellen, in die Lösung. Weiterhin kann auch der Träger in dem Behälter bewegbar, etwa rotierbar, sein. Dadurch kann eine Relativbewegung der Lösung zu dem Träger ermöglicht werden, was wiederum das Kristallisieren der Lösung an dem Träger deutlich verbessern kann.

Bevorzugt kann das Prozessgefäß wenigstens einen Flüssigkeitseinlass und einen von dem Flüssigkeitseinlass verschiedenen Flüssigkeitsauslass aufweisen. In dieser Ausgestaltung kann besonders vorteilhaft ein kontinuierliches Verfahren unter Verwendung zweier gekoppelter Prozessgefäße ermöglicht werden. Denn durch den Auslass kann hinsichtlich der kristallisierten Substanz abgereicherte Lösung entnommen werden, wohingegen durch den Einlass weitere Lösung nachgeführt werden kann. Flussabwärts des Auslasses kann die Lösung entweder verworfen werden, erneut dem Einlass zugeführt werden, oder auch einem weiteren insbesondere gekoppeltem Prozessgefäß zugeführt werden, in welchem eine weitere Substanz auskristallisiert werden soll.

Es ist ferner von der Erfindung umfasst, dass die Kristallisationsanordnung mehr als zwei Prozessgefäße aufweist. In diesem Fall können die Träger wiederum insbesondere voneinander verschiedene Impfkristalle an den Trägern aufweisen und die Prozessgefäße durch eine Fluidverbindung miteinander verbunden sein und so miteinander gekoppelt sein.

Insbesondere kann es vorgesehen sein, dass die Kristallisationsanordnung wenigstens zwei Prozessgefäße aufweist, wobei die wenigstens zwei Prozessgefäße in Serie geschaltet sind, und wobei die Träger der Prozessgefäße mit von einander verschiedenen Impfkristallen bestückt sind.

In dieser Ausgestaltung können die beiden vorgesehenen Prozessgefäße insbesondere verwendet werden, um nicht nur eine Substanz aus der Lösung zu isolieren, sondern um zwei Substanzen durch Auskristallisation aus der Lösung zu entfernen. Dies kann in einem kontinuierlichen Prozess erfolgen derart, dass die Lösung zunächst in den Prozessgefäßen der ersten Kristallisationsanordnung eingefüllt wird und dort die Substanz an dem entsprechenden Träger beziehungsweise an den Impfkristallen auskristallisiert. Anschließend kann die Lösung in das zweite Prozessgefäß verbracht werden, wo sie mit den Impfkristallen des zweiten Trägers in Kontakt kommt.

Anschließend können wie bei dem Verfahren beschrieben die Kristalle von dem Träger beziehungsweise von den Impfkristallen entfernt und isoliert werden.

Die vorbeschriebene Ausgestaltung ermöglicht somit auf effektive Weise die Durchführung des beschriebenen Kristallisationsverfahrens und somit ebenfalls die vorstehend beschriebenen Vorteile insbesondere hinsichtlich eines effektiven Isolierens von in der Lösung befindlicher Substanzen.

Beschrieben wird somit beispielsweise eine Kristallisationsanordnung zum Kristallisieren und Separieren wenigstens einer Substanz aus einer Lösung, insbesondere zum Durchführen eines Verfahrens wie vorstehend beschrieben, aufweisend ein Prozessgefäß, insbesondere ein zylindrisches Prozessgefäß, zum Aufnehmen der Lösung, wobei das Prozessgefäß eine Aufnahme zum Aufnehmen eines Trägers aufweist, wobei der Träger mit an dem Träger immobilisierten Impfkristallen für die Substanz versehen ist und zerstörungsfrei von der Aufnahme lösbar ist, und wobei der Träger ferner derart in der Aufnahme positionierbar ist,
dass die Impfkristalle mit der Lösung in Kontakt bringbar sind, wobei ferner bevorzugt eine Temperiereinheit zum direkten oder indirekten Temperieren der Impfkristalle vorgesehen ist, und wobei
die Kristallisationsanordnung einen Filter zum Filtrieren von in dem Prozessgefäß vorliegender Lösung aufweist, oder wobei
die Kristallisationsanordnung eine Zentrifuge zum Zentrifugieren des Prozessgefäßes aufweist.

Hinsichtlich weiterer technischer Merkmale und Vorteile der Kristallisationsanordnung wird hiermit auf die Beschreibung des Verfahrens, der Verwendung, der Anordnung, die Beispiele, die Figuren und die Beschreibung der Figuren verwiesen, und umgekehrt.

Beispielhaft wird ferner eine Verwendung wenigstens eines Kristallisationsverfahrens und einer Kristallisationsanordnung wie diese vorstehend beschrieben sind, für eine Enantiomerentrennung eines racemischen Gemisches.

In dieser Ausgestaltung kann somit insbesondere ein Racemat, bevorzugt ein konglomeratbildendes Substanzgemisch beziehungsweise Stoffsystems, aufgetrennt werden. Dies ist für viele technische Verfahren von Vorteil, da bei chemischen Reaktionen gegebenenfalls Racemate anfallen, jedoch oftmals nur ein isoliertes Enantiomer des Racemats beziehungsweise des Enantiomerengemisches benötigt wird. Insbesondere für eine Enantiomerentrennung kann das hier beschriebene Kristallisationsverfahren von großem Vorteil sein, da Enantiomere sich oftmals durch Kristallisationsprozesse trennen lassen.

Um ein Enantiomer zu isolieren kann es ausreichend sein, den Träger jeweils mit einem Impfkristall zu verwenden, so dass das das gewünschte Enantiomer kristallisiert und isoliert werden kann.

Insoweit beide Enantiomere isoliert werden sollen, kann mit unterschiedlichen Trägern beziehungsweise mit unterschiedlichen Impfkristallen gearbeitet werden, etwa indem nacheinander unterschiedliche Träger in einem Batchverfahren oder auch in einem kontinuierlichen Prozess verwendet werden, wie dies vorstehend in größerem Detail beschrieben ist.

Es hat sich gezeigt, dass die Kristallisationsanordnung, das Verfahren und die Kristallisationsanordnung wie diese vorstehend beschrieben sind, besonders gut dazu geeignet sind, effektiv und definiert die einzelnen Enantiomere getrennt von einander und hoch selektiv zu isolieren und so eine Enantiomerentrennung durchzuführen.

Hinsichtlich weiterer technischer Merkmale und Vorteile der Verwendung wird hiermit auf die Beschreibung des Kristallisationsverfahrens, der Kristallisationsanordnung, der Anordnung, die Beispiele, die Figuren und die Beschreibung der Figuren verwiesen, und umgekehrt.

Weiter beschrieben ist eine Anordnung aus einem Prozessgefäß, einem Auffanggefäß und einer einen Filter aufweisenden Filtereinheit, wobei das Prozessgefäß und das Auffanggefäß fluiddicht an der Filtereinheit befestigt und durch den Filter fluidisch miteinander verbunden sind derart, dass Lösung von dem Prozessgefäß in das Auffanggefäß unter Vakuum oder Zentrifugalkraft durch den Filter filtrierbar ist, wobei Feststoff durch den Filter in dem Prozessgefäß zurückgehalten und von der Lösung getrennt wird.

Eine derartige Anordnung erlaubt auf besonders vorteilhafte Weise, dass ein Filtrieren ohne oder zumindest mit deutlich reduzierter Gefahr einer Kontamination von Filtrat möglich ist. Darüber hinaus kann eine besonders einfache Anwendbarkeit gegeben sein, da das Prozessgefäß, beispielsweise nach Entfernen des Deckels, mit der Filtereinheit und dem Auffanggefäß auf einfache Weise verbunden werden kann.

Besonders vorteilhaft können Prozessgefäß und Auffanggefäß gleich ausgestaltet sein. In dieser Ausgestaltung kann das Auffanggefäß ebenfalls als Prozessgefäß unter Verwendung eines Kristallisationseinsatzes verwendet werden.

Zur einfachen Montage und Demontage sind ferner bevorzugt lösbare Befestigungen von Prozessgefäß beziehungsweise Auffanggefäß an der Filtereinheit bevorzugt. Beispiele umfassen etwa Schraubverbindungen, Klemmverbindungen und Ähnliches.

Hinsichtlich weiterer technischer Merkmale und Vorteile der Anordnung wird hiermit auf die Beschreibung des Kristallisationsverfahrens, der Kristallisationsanordnung, der Verwendung, die Beispiele, die Figuren und die Beschreibung der Figuren verwiesen, und umgekehrt.

Nachfolgend wird die Erfindung unter Bezugnahme auf die anliegenden Figuren exemplarisch erläutert, wobei die nachfolgend dargestellten Merkmale sowohl jeweils einzeln als auch in Kombination einen Aspekt der Erfindung darstellen können, und wobei die Erfindung nicht auf die folgende Zeichnung, die folgende Beschreibung und das folgende Ausführungsbeispielbeschränkt ist.

Es zeigen:
Fig. 1zeigt schematisch eine Kristallisationsanordnung gemäß der vorliegenden Erfindung;
Fig. 2 zeigt schematisch eine Anordnung zum Zentrifugieren der Lösung;
Fig. 3 zeigt eine Zentrifuge für eine Kristallisationsanordnung gemäß der vorliegenden Erfindung; und
Fig. 4 zeigt einen Aufbau zum kontinuierlichen Kristallisieren und Separieren verschiedener Substanzen aus einer Lösung.

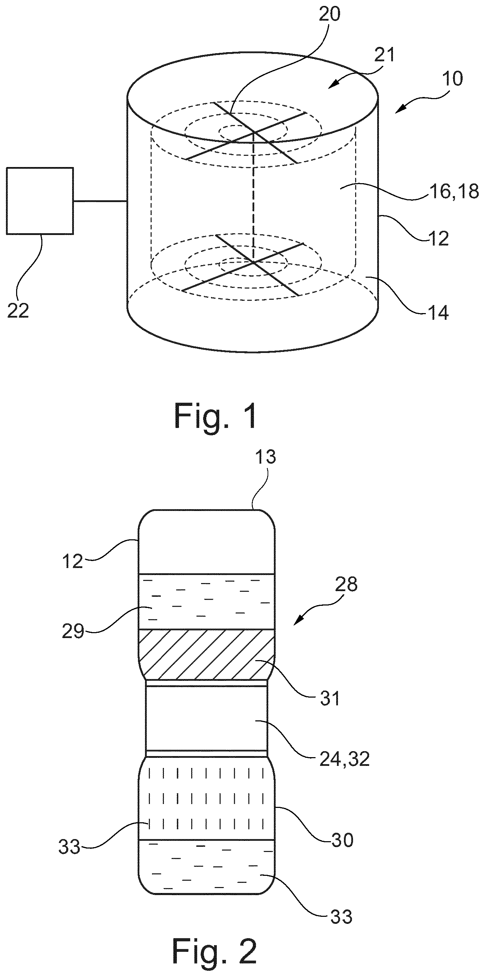

In der Figur 1 ist schematisch eine Kristallisationsanordnung 10 zum Kristallisieren wenigstens einer Substanz aus einer Lösung schematisch und im Teil gezeigt.

Die Kristallisationsanordnung 10 umfasst ein Prozessgefäß 12, das gemäß Figur 1 als zylindrisches Prozessgefäß ausgebildet ist. Das Prozessgefäß 12 dient zum Aufnehmen der Lösung und damit der in der Lösung gelösten Substanz. Weiterhin umfasst das Prozessgefäß 12 eine Aufnahme 14 zum Aufnehmen eines Trägers 16 beziehungsweise eines den Träger 16 aufweisenden Kristallisationseinsatzes. Die Aufnahme 14 ist insbesondere ein inneres Volumen des Prozessgefäßes 12, so dass der Träger 16 in dem Prozessgefäß 12 angeordnet werden kann. Der Träger 16 ist weiterhin mit an dem Träger 16 immobilisierten Impfkristallen 18 für die Substanz versehen und zerstörungsfrei aus der Aufnahme 14 lösbar. Der Träger 16 ist ferner derart in der Aufnahme 14 positioniert, dass die Impfkristalle 18 mit der Lösung in Kontakt bringbar sind. Dies ist in der Figur 1 gezeigt, wobei ferner ein Halter 20 für den Träger 16 vorgesehen ist, mit dem der Träger 16 in die Aufnahme bringbar und aus dieser entfernbar ist. Der Träger 16 gemeinsam mit dem Halter 20 bilden den Kristallisationseinsatz 21 aus.

Es ist ferner gezeigt, dass der Träger 16 in einer archimedischen Spiralform ausgebildet ist. In der in der Figur 1 gezeigten Form ist der Träger 16, der insbesondere aus einer Hartfolie ausgestaltet sein kann, unter den Arbeits- beziehungsweise Trennbedingungen formstabil. Letzteres ist grundsätzlich für den Träger 16 von Vorteil, unabhängig von der spezifischen Form. Dadurch kann ermöglicht werden, dass der Träger 16 beziehungsweise die Impfkristalle18 effektiv von der Lösung umströmt werden können und so die Substanz effektiv an den Impfkristallen 18 auskristallisiert. Eine derartige Ausgestaltung bietet eine dichte, homogene und statische Verteilung der Impfkristalle 18 und dadurch ein schnelles und homogenes Auskristallisieren.

Der Prozessgefäß 12 kann mit Fachmann bekannten Methoden temperiert werden.

Um das Auskristallisieren effektiv zu ermöglichen ist ferner eine Temperiereinheit 22 zum direkten oder indirekten Temperieren des Trägers 16 beziehungsweise der Impfkristalle 18 vorgesehen. In der Ausgestaltung gemäß Figur 1 ist eine Temperiereinheit 22 schematisch dargestellt, die auf die Lösung wirkt und somit den Träger 16 und die Impfkristalle 18 indirekt temperiert.

Die gezeigte Kristallisationsanordnung 10 weist ferner wenigstens eines von einem Filter 24 zum Filtrieren von in dem Prozessgefäß 12 vorliegender Lösung, insbesondere zum Entfernen der an Kristallen anhaftender Lösung, und einer Zentrifuge 26 zum Zentrifugieren des Prozessgefäßes 12 auf. Dadurch kann es in besonders vorteilhafter Weise ermöglicht werden, dass die gebildeten Kristalle in dem Prozessgefäß 12 isoliert, also etwa gewaschen und getrocknet werden. Genauer ist es vorgesehen, dass die Kristallisationsanordnung 10 einen Filter 24 zum Filtrieren von in dem Prozessgefäß 12 vorliegender Lösung aufweist, und dass die Kristallisationsanordnung 10 eine Zentrifuge 26 zum Zentrifugieren des Prozessgefäßes 12 aufweist.

In der Figur 2 ist eine Anordnung 28 gezeigt, mittels welcher das Prozessgefäß 12 auf besonders vorteilhafte Weise zentrifugierbar ist. Zusätzlich zu dem Prozessgefäß 12 ist ein Auffanggefäß 30 vorgesehen, wobei zwischen dem Prozessgefäß 12 und dem Auffanggefäß 30 eine Filtereinheit 32 mit einem Filter 24 vorgesehen ist. Wird nun diese Anordnung 28 in einer Zentrifuge 26 zentrifugiert, werden die gebildeten Kristalle durch den Filter 24 zurückgehalten und die weitere Lösung gelangt durch den Filter 24 und kann in dem Auffanggefäß 30 gesammelt werden. Dadurch kann die Separation der Kristalle von der Lösung außerordentlich schnell und frei von Kontamination erfolgen. Besonders für die Spaltung von Racematen, wie insbesondere von konglomeratbildenden Systemen kann eine Trennung punktgenau hinsichtlich des Drehwerts durchgeführt werden.

Diesbezüglich ist in der Figur 2 gezeigt, dass sich auf dem Filter 24 ein Filterkuchen 31 von an dem Filter zurückgehaltenen Kristallen ausbildet, wobei die Lösung als Filtrat 33 den Filter 24 durchdringt und sich in dem Auffanggefäß 30 sammelt. Der Filterkuchen 31 beziehungsweise die Kristalle können dann isoliert werden.

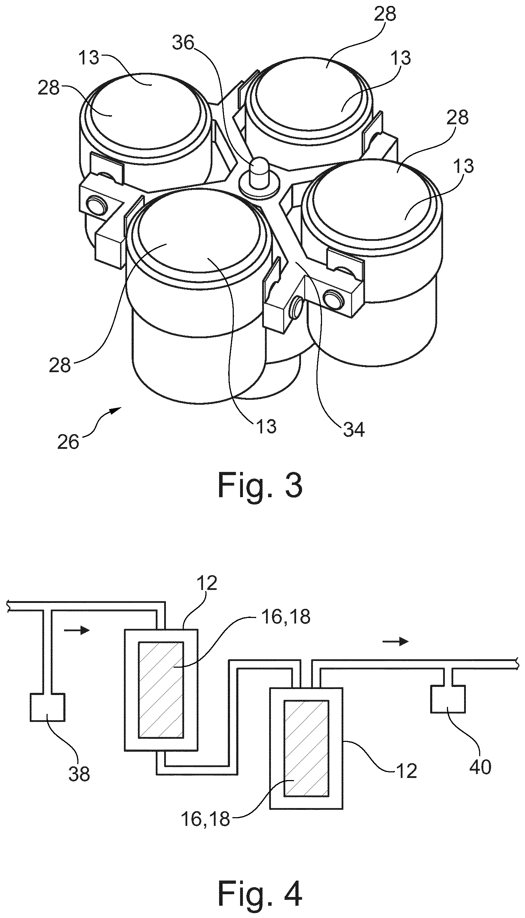

In der Figur 3 ist eine Zentrifuge 26 gezeigt, in der vier Anordnungen 28 mit Prozessgefäßen 12 vorgesehen sind. Die Anordnungen 28 sind an einem Motor der Zentrifuge 26 an Befestigungsarmen 34 schwenkbar gelagert befestigt, wobei die Befestigungsarme 34 durch eine Antriebsnabe 36 des Motors in Rotation versetzt werden können, um so ein Zentrifugieren zu erlauben. Dabei ist darauf hinzuweisen, dass der in der Figur 3 gezeigte obere Bereich der Boden 13 des Prozessgefäßes 12 ist, um ein effektives Entfernen der Lösung aus dem Prozessgefäß 12 zu ermöglichen, wie dies auch in der Figur 2 gezeigt ist.

Durch die vorbeschriebene Kristallisationsanordnung 10 ist ein Kristallisationsverfahren zum Kristallisieren und Separieren einer Substanz aus einer Lösung durchführbar, in welcher sich die Substanz befindet, insbesondere übersättigt gelöst ist, aufweisend die Verfahrensschritte:
a) Einbringen der die Substanz aufweisenden Lösung in ein Aufnahmevolumen eines Prozessgefäßes 12 einer Kristallisationsanordnung 10, wobei die Lösung nach dem Einbringen eine Temperatur T1 aufweist;
b) Bereitstellen eines Kristallisationseinsatzes 21 mit wenigstens einem Träger 16 zum Einsetzen in das Prozessgefäß 12, wobei die Oberfläche des Trägers 16 mit Impfkristallen eines Stoffes zum Kristallwachstum derart bestückt ist, dass die Impfkristalle 18 an der Oberfläche des Trägers 16 des Kristallisationseinsatzes 21 immobilisiert sind und wobei wenigstens ein Träger 16 eine Spiralform aufweist,
c) Positionieren des Kristallisationseinsatzes 21 in einer Aufnahme 14 der Kristallisationsanordnung 10 derart, dass der Träger 16 mit der Lösung in Kontakt bringbar ist,
d) gegebenenfalls Abkühlen der Impfkristalle 18 unter Einstellen der Temperatur an den Impfkristallen 18 auf eine Temperatur T2, wobei T2 geringer ist, als T1,
e) Auskristallisieren der Substanz an der Oberfläche der Impfkristalle 18, und
f) gegebenenfalls Isolieren der gebildeten Kristalle der Substanz in dem Prozessgefäß (12).

Unter Verwendung der vorbeschriebenen Anordnung können zusätzlich zu der Möglichkeit, eine Substanz aus der Lösung zu isolieren auch unterschiedliche in der Lösung befindliche Substanzen getrennt voneinander isoliert werden. Dazu kann die Lösung nacheinander mit Trägern 16 mit unterschiedlichen Impfkristallen 18 behandelt werden.

Beispielsweise kann die Lösung, wenn sie in dem Auffangbehälter 30 der Anordnung 28 gesammelt wurde, erneut in ein Prozessgefäß 12 eingebracht werden, in dem der Träger 16 beziehungsweise die Impfkristalle 18 nach einem ersten Verfahren der Kristallisation geändert wurden. Anschließend kann das gleiche Verfahren noch einmal durchgeführt werden.

Einfacher ist dies möglich, wenn Prozessgefäß 12 und Auffanggefäß 30 baugleich ausgeführt sind. In diesem Fall kann in die Lösung ein weiterer Kristallisationseinsatz 21 eingefügt werden, der andere Impfkristalle 18 aufweist.

Alternativ kann die Kristallisationsanordnung 10 wenigstens zwei gekoppelte Prozessgefäße 12 aufweisen, wobei die wenigstens zwei Prozessgefäße 12 in Serie geschaltet sind, und wobei die Träger 16 der Prozessgefäße 12 mit zueinander verschiedenen Impfkristallen 18 bestückt sind. Diese Ausgestaltung ist in der Figur 4 gezeigt. In dieser Ausgestaltung ist ein kontinuierlicher Prozess möglich, indem die Lösung langsam durch beide Prozessgefäße 12 geleitet wird. Dadurch kristallisieren die unterschiedlichen Substanzen an den unterschiedlichen Trägern 16 beziehungsweise den unterschiedlichen Impfkristallen 18 aus. So wird eine getrennte Isolation ohne die Gefahr einer Kontamination auf besonders effiziente Weise möglich.

Stromaufwärts des ersten Prozessgefäßes 12 kann eine Schutzgasquelle 38 vorgesehen sein, mittels der in dem Prozessgefäß 12 gebildete Kristalle getrocknet werden können. Alternativ oder zusätzlich kann stromabwärts des zweiten Prozessgefäßes 12 eine Vakuumpumpe 40 vorgesehen sein. Mit dieser können ebenfalls an den Kristallen anhaftende Lösungsmittelreste entfernt und die Kristalle so getrocknet werden.

### Beispiele

In den folgenden Beispielen wird zunächst die Herstellung von Impfkristallen auf einem Träger 16 gezeigt. Anschließend erfolgt mit den entsprechend erzeugten Trägern 16 eine Racemattrennung.

### Herstellung von Impfkristallen auf Trägern

### Herstellung von L-Threonin Impfkristallen auf Trägern 16:

In einem zylindrischen Prozessgefäß 12 mit Schraubverschluss wird eine bei 60°C gesättigte Lösung vom L-Threonin in Wasser hergestellt und auf 35°C gekühlt. Ein Kristallisationseinsatz 21 mit archimedisch spiralförmigem Träger 16 aus PP-Hartfolie, mit Abstand zwischen den Spiralen von etwa 3 mm, wird in die Lösung kurz eingetaucht und nach Abtrennung aus der Lösung kurz angetrocknet. Das Verfahren wurde einige Mal bis zum Gewinn einer mit Impfkristallen dünn homogen verteilt überzogenen Oberfläche wiederholt. Der so erzeugte Kristallisationseinsatz 21 wird mit den erzeugten L-Threonin Impfkristallen bei einer nachfolgenden Trennung eingesetzt.

### Herstellung von D-Threonin Impfkristallen auf Trägern 16:

In einem zylindrischen Rundbodenkolben mit Schraubverschluss wird eine bei 60°C gesättigte Lösung vom D-Threonin in Wasser hergestellt und auf 35°C gekühlt. Ein Kristallisationseinsatz 21 mit archimedisch spiralförmigem Träger 16 aus PP-Hartfolie, mit Abstand von zwischen Spiralen etwa 3 mm, wird in die Lösung kurz eingetaucht und nach Abtrennung aus der Lösung kurz angetrocknet. Das Verfahren wurde einige Mal bis zum Gewinn einer mit Impfkristallen dünn homogen verteilt überzogenen Oberfläche wiederholt. Der so erzeugte Kristallisationseinsatz 21 wird mit den erzeugten D-Threonin-Impfkristallen bei einer nachfolgenden Trennung eingesetzt.

### Batchweise Trennung von DL-Threonin durch bevorzugte Kristallisation mit Impfkristallen auf Trägern 16

### 1.1 L-Threonin:

Es wird unter Rühren in ein Prozessgefäß 12, nämlich einen zylindrischen Rundbodenkolben mit Schraubverschluss, eine bei 50°C gesättigte Lösung des racemischen Gemischs von DL-Threonin in Wasser eingebracht und bei 55°C 60 Minuten gerührt. Die Lösung wird auf 35°C gekühlt und der Rührer wird abgestellt. Ein Kristallisationseinsatz 21 wie vorstehend beschrieben mit L-Threonin-Impfkristallen, wobei dessen Temperatur die gleiche Temperatur von 35°C wie die Lösung hat, wird vorsichtig in der Lösung positioniert. Bei dieser Temperatur wird die Lösung 45 Minuten gehalten. Das übersättigte L-Threonin in der Lösung kristallisiert statisch auf der Oberfläche der Impfkristalle aus. Nach 45 Minuten wird der Kristallisationseinsatz 21 mit den Kristallinen aus der Lösung herausgenommen und in einen Zentrifugenbehälter übertragen und über ein 2-Flaschensystem mit dazwischen angeordnetem Filtereinsatz 3 Minuten zentrifugiert. Die an den Kristallinen angehaftete Lösung wird in der unteren Flasche gesammelt. Das gewonnene L-Threonin ist trocken und hat einen Enantiomerenüberschuss von > 99% ee.

### 1.2 D-Threonin:

Die aus **1.1** in der unteren Flasche gesammelte und filtrierte Lösung wird mit der zurückgebliebenen Lösung im Prozessgefäß 12 aus Versuch **1.1** gemischt und bei 55 °C 60 Minuten gerührt und anschließend auf 35°C gekühlt. Der Rührer wird abgestellt. Ein Kristallisationseinsatz 21 wie vorstehend beschrieben mit D-Threonin Impfkristallen, wobei dessen Temperatur die gleiche Temperatur von 35°C wie die Lösung hat, wird vorsichtig in der Lösung positioniert. Bei dieser Temperatur kristallisiert das übersättigte D-Threonin statisch auf der Oberfläche der Impfkristalle aus. Nach 45 Minuten wird die Lösung dekantiert. An der Öffnung des Prozessgefäßes 12 wird ein Zentrifugenbehälter durch eine Schraubverbindung mit einer dazwischen angeordneten Filteranordnung dicht und fest angeschlossen. Die an den Kristallinen angehaftete Lösung wird zentrifugiert und in der unteren Flasche gesammelt. Das gewonnene D-Threonin hat einen Enantiomerenüberschuss von > 99% ee.

### Kontinuierliches Trennen von DL-Threonin durch bevorzugte Kristallisation mit Impfkristallen auf Trägern 16

In 2 Prozessgefäßen 12 **A** und **B** wird separat eine bei 50°C gesättigte, auf 38°C temperierte übersättigte Lösung des racemischen Gemischs in Wasser eingebracht. Ein ebenfalls auf 38°C temperierter Kristallisationseinsatz 21 mit L-Threonin-Impfkristallen wird vorsichtig in der Lösung des Prozessgefäßes 12 **A** positioniert. Gleichzeitig wird ein auf 38°C temperierter Kristallisationseinsatz 21 mit D-Threonin-Impfkristallen vorsichtig in die Lösung des Prozessgefäßes 12 **B** positioniert. In Prozessgefäß 12 **A** wird eine bei 50°C gesättigte, auf 38°C temperierte übersättigte Lösung des racemischen Gemischs in Wasser kontinuierlich eingeführt. Aus Prozessgefäß 12 **A** wird die Lösung mit der gleichen Geschwindigkeit in Prozessgefäß **B** abgeführt. Aus Prozessgefäß 12 **B** fließt die Lösung mit der gleichen Geschwindigkeit in ein Prozessgefäß 12, wo die bei 50°Cgesättigte, auf 38°C temperierte übersättigte Lösung des racemischen Gemischs in Wasser herstellt wird. Prozessgefäße 12 A und B werden auf 38°C temperiert. Nach 3 Stunden werden die beiden Prozessgefäße 12 **A** und **B** wie beim Versuch **1.2** zentrifugiert. Das isolierte L-Threonin und D-Threonin haben jeweils einen Enantiomerenüberschuss von >99% ee.

Die vorliegende Erfindung erlaubt es somit, ein Verfahren und eine Vorrichtung zu schaffen, welche die Nachteile des Stands der Technik zumindest teilweise zu überwinden vermag. Die homogen fein insbesondere in allen Volumenelementen der Lösung verteilten Impfkristalle eines Stoffs, insbesondere eines Enantiomeren, soll an Trägeroberfläche immobilisiert statisch erscheinen, und nicht, wie im Stand der Technik beschrieben, als Kristallsuspension. Dadurch kann die Kristallisation rasch an die dicht, homogen fein verteilten Oberfläche der Impfkristalle stattfinden. Die erhältlichen Kristalle können groß und hinsichtlich der Größe homogen sein und schnell und vollständig von der Lösung mechanisch trennbar sein. Darüber hinaus können hochreine Substanzen erhalten werden.

### Bezugszeichen

- 10: Kristallisationsanordnung
- 12: Prozessgefäß
- 13: Boden
- 14: Aufnahme
- 16: Träger
- 18: Impfkristalle
- 20: Halter
- 21: Kristallisationseinsatz
- 22: Temperiereinheit
- 24: Filter
- 26: Zentrifuge
- 28: Anordnung
- 30: Auffanggefäß
- 31: Filterkuchen
- 32: Filtereinheit
- 33: Filtrat
- 34: Befestigungsarm
- 36: Antriebsnabe
- 38: Schutzgasquelle
- 40: Vakuumpumpe

## Patentansprüche

1. Verfahren zum Kristallisieren und Separieren einer Substanz aus einer Lösung, in welcher sich die Substanz befindet, insbesondere übersättigt gelöst ist, aufweisend die Verfahrensschritte:
a) Einbringen der die Substanz aufweisenden Lösung in ein Aufnahmevolumen eines Prozessgefäßes (12) einer Kristallisationsanordnung (10), wobei die Lösung nach dem Einbringen eine Temperatur T1 aufweist;
b) Bereitstellen eines Kristallisationseinsatzes (21) mit wenigstens einem Träger (16) zum Einsetzen in das Prozessgefäß (12), wobei die Oberfläche des Trägers (16) mit Impfkristallen (18) für die Substanz zum Kristallwachstum derart bestückt ist, dass die Impfkristalle (18) an der Oberfläche des Trägers (16) des Kristallisationseinsatzes (21) immobilisiert sind,
c) Positionieren des Kristallisationseinsatzes (21) in einer Aufnahme (14) der Kristallisationsvorrichtung (10) derart, dass der Träger (16) mit der Lösung in Kontakt bringbar ist,
d) gegebenenfalls Abkühlen der Impfkristalle (18) unter Einstellen der Temperatur an den Impfkristallen (18) auf eine Temperatur T2, wobei T2 geringer ist, als T1,
e) Auskristallisieren der Substanz an der Oberfläche der Impfkristalle (18), und
f) gegebenenfalls Isolieren der gebildeten Kristalle der Substanz in dem Prozessgefäß (12),
**dadurch gekennzeichnet, dass**
wenigstens ein Träger (16) ein spiralförmiger Träger (16) ist.

2. Verfahren nach Anspruch 1, **dadurch gekennzeichnet, dass** das Verfahren den Verfahrensschritt f) aufweist und Verfahrensschritt f) die Verfahrensschritte umfasst:
f1) Ablösen von an den Impfkristallen (18) kristallisierter Substanz von dem Träger (16) innerhalb des Prozessgefäßes (12);
f2) Entfernen von Lösung von den gebildeten Kristallen;
f3) gegebenenfalls Reinigen der gebildeten Kristalle; und
f4) Trocknen der Kristalle.

3. Verfahren nach Anspruch 2, **dadurch gekennzeichnet, dass** wenigstens einer der Verfahrensschritte f2) und f3) ein Filtrieren der Lösung mitsamt in der Lösung befindlicher Kristalle zum Sammeln der Kristalle auf einem Filter (24) insbesondere im Prozessgefäß (12) umfasst.

4. Verfahren nach einem der Ansprüche 1 bis 3, **dadurch gekennzeichnet, dass** für ein Separieren eine Anordnung (28) aus einem Prozessgefäß (12), einem Auffanggefäß (30) und einer einen Filter (24) aufweisenden Filtereinheit (32) verwendet wird, wobei das Prozessgefäß (12) und das Auffanggefäß (30) fluiddicht an der Filtereinheit (32) befestigt und durch den Filter (34) fluidisch miteinander verbunden sind derart, dass Lösung von dem Prozessgefäß (12) in das Auffanggefäß (30) unter Vakuum oder Zentrifugalkraft durch den Filter (24) filtriert wird, wobei Feststoff durch den Filter (24) in dem Prozessgefäß (12) zurückgehalten und von der Lösung getrennt wird.

5. Verfahren nach einem der Ansprüche 1 bis 4, **dadurch gekennzeichnet, dass** das Verfahren eine Enantiomerentrennung ist, wobei die Substanz ein Enantiomer eines racemischen Gemischs ist und die Lösung das racemische Gemisch aufweist.

6. Verfahren nach einem der Ansprüche 1 bis 5, **dadurch gekennzeichnet, dass** die Verfahrensschritt a) bis e) als gemeinsame Sequenz sich wiederholend in einem Prozessgefäß (12) ausgeführt werden, wobei zwischen zwei sich wiederholenden Sequenzen der Kristallisationseinsatz (21) des Prozessgefäßes (12) ausgetauscht wird, wobei bei einer ersten Sequenz der Träger (16) eine erste Art an Impfkristallen (18) aufweist und wobei bei einer zweiten Sequenz der Träger (16) eine von der ersten Art verschiedene zweite Art an Impfkristallen (18) aufweist.

7. Verfahren nach einem der Ansprüche 1 bis 6, **dadurch gekennzeichnet, dass** die Verfahrensschritte a) bis e) als gemeinsame Sequenz sich wiederholend in verschiedenen Prozessgefäßen (12) ausgeführt werden, wobei der Träger (16) eines ersten Prozessgefäßes (12) eine erste Art von Impfkristallen (18) aufweist und wobei der Träger (16) eines zweiten Prozessgefäßes (12) eine von der ersten Art verschiedene zweite Art an Impfkristallen (18) aufweist.

8. Verfahren nach einem der Ansprüche 1 bis 7, **dadurch gekennzeichnet, dass** Verfahrensschritt a) zumindest zum Teil vor Verfahrensschritt c) erfolgt.

9. Verfahren nach einem der Ansprüche 1 bis 8, **dadurch gekennzeichnet, dass** Verfahrensschritt a) zumindest zum Teil nach Verfahrensschritt c) erfolgt.

10. Kristallisationsanordnung (10) zum Kristallisieren wenigstens einer Substanz aus einer Lösung, insbesondere zum Durchführen eines Verfahrens nach einem der Ansprüche 1 bis 9, aufweisend ein Prozessgefäß (12) zum Aufnehmen der Lösung und aufweisend einen Kristallisationseinsatz (21) mit wenigstens einem Träger (16) zum Einsetzen in das Prozessgefäß (12), wobei die Oberfläche des Trägers (16) mit Impfkristallen (18) für die Substanz zum Kristallwachstum derart bestückt ist, dass die Impfkristalle (18) an der Oberfläche des Trägers (16) des Kristallisationseinsatzes (21) immobilisiert sind, wobei das Prozessgefäß (12) eine Aufnahme (14) zum Aufnehmen des Kristallisationseinsatzes (21) mit dem Träger (16) aufweist, wobei der Kristallisationseinsatz (21) zerstörungsfrei von der Aufnahme (14) lösbar ist und wobei der Kristallisationseinsatz (21) ferner derart in der Aufnahme (14) positionierbar ist, dass die Impfkristalle (18) mit der Lösung in Kontakt bringbar sind, **dadurch gekennzeichnet, dass** wenigstens ein Träger (16) ein spiralförmiger Träger (16) ist.

11. Kristallisationsanordnung (10) nach Anspruch 10, **dadurch gekennzeichnet, dass** die Kristallisationsanordnung (10) einen Filter (24) zum Filtrieren von in dem Prozessgefäß (12) vorliegender Lösung aufweist.

12. Kristallisationsanordnung nach einem der Ansprüche 10 oder 11, **dadurch gekennzeichnet, dass** der Träger (16) als Folie oder Gewebe ausgestaltet ist.

13. Kristallisationsanordnung nach Anspruch 12, **dadurch gekennzeichnet, dass** die Folie oder das Gewebe mit Durchtrittsöffnungen versehen ist.

## Claims

1. Method for crystallizing and separating a substance from a solution in which the substance is present, in particular in supersaturated solution, comprising the method steps.
a) introducing the solution containing the substance into a receiving volume of a process vessel (12) of a crystallization arrangement (10), wherein the solution has a temperature T1 after introduction;
b) providing a crystallization insert (21) comprising at least one carrier (16) for insertion into the process vessel (12), wherein the surface of the carrier (16) is provided with seed crystals (18) for the substance for crystal growth in such a way that the seed crystals (18) are immobilized at the surface of the carrier (16) of the crystallization insert (21);
c) positioning the crystallization insert (21) in a receptacle (14) of the crystallization device (10) in such a way that the carrier (16) can be brought into contact with the solution;
d) optionally cooling the seed crystals (18) while adjusting the temperature at the seed crystals (18) to a temperature T2, wherein T2 is lower than T1;
e) crystallizing the substance at the surface of the seed crystals (18); and
f) optionally isolating the crystals of the substance formed in the process vessel (12),
**characterized in that**
at least one carrier (16) is a spiral-shaped carrier (16).

2. Method according to claim 1, **characterized in that** the method comprises method step f) and method step f) comprises the methos steps:
f1) detaching substance crystallized at the seed crystals (18) from the carrier (16) within the process vessel (12);
f2) removing solution from the formed crystals;
f3) optionally purifying the formed crystals; and
f4) drying the crystals.

3. Method according to claim 2, **characterized in that** at least one of method steps f2) and f3) comprises filtering the solution together with crystals present in the solution in order to collect the crystals on a filter (24), in particular in the process vessel (12).

4. Method according to any one of claims 1 to 3, **characterized in that** for separation an arrangement (28) consisting of a process vessel (12), a collection vessel (30) and a filter unit (32) comprising a filter (24) is used, wherein the process vessel (12) and the collection vessel (30) are attached to the filter unit (32) in a fluid-tight manner and are connected to each other fluidically by the filter (34) in such a way that solution from the process vessel (12) is filtered into the collection vessel (30) under vacuum or centrifugal force through the filter (24), whereby solid material is retained by the filter (24) in the process vessel (12) and separated from the solution.

5. Method according to any one of claims 1 to 4, **characterized in that** the method is an enantiomer separation, wherein the substance is an enantiomer of a racemic mixture and the solution comprises the racemic mixture.

6. Method according to any one of claims 1 to 5, **characterized in that** method steps a) to e) are carried out repeatedly as a common sequence in a process vessel (12), wherein between two repeated sequences the crystallization insert (21) of the process vessel (12) is exchanged, wherein in a first sequence the carrier (16) comprises a first type of seed crystals (18), and wherein in a second sequence the carrier (16) comprises a second type of seed crystals (18) different from the first type.

7. Method according to any one of claims 1 to 6, **characterized in that** the method steps a) to e) are carried out repeatedly as a common sequence in different process vessels (12), wherein the carrier (16) of a first process vessel (12) comprises a first type of seed crystals (18), and wherein the carrier (16) of a second process vessel (12) comprises a second type of seed crystals (18) different from the first type.

8. Method according to any one of claims 1 to 7, **characterized in that** method step a) is carried out at least in part prior to method step c).

9. Method according to any one of claims 1 to 8, **characterized in that** method step a) is carried out at least in part after method step c).

10. Crystallization arrangement (10) for crystallizing at least one substance from a solution, in particular for carrying out a method according to any one of claims 1 to 9, comprising a process vessel (12) for receiving the solution and comprising a crystallization insert (21) comprising at least one carrier (16) for insertion into the process vessel (12), wherein the surface of the carrier (16) is provided with seed crystals (18) for the substance for crystal growth in such a way that the seed crystals (18) are immobilized at the surface of the carrier (16) of the crystallization insert (21), wherein the process vessel (12) comprises a receptacle (14) for receiving the crystallization insert (21) with the carrier (16), wherein the crystallization insert (21) can be removed from the receptacle (14) in a non-destructive manner, and wherein the crystallization insert (21) is further positionable in the receptacle (14) such that the seed crystals (18) can be brought into contact with the solution, **characterized in that** at least one carrier (16) is a spiral-shaped carrier (16).

11. Crystallization arrangement (10) according to claim 10, **characterized in that** the crystallization arrangement (10) comprises a filter (24) for filtering solution present in the process vessel (12).

12. Crystallization arrangement according to claim 10 or 11, **characterized in that** the carrier (16) is designed as a foil or fabric.

13. Crystallization arrangement according to claim 12, **characterized in that** the foil or fabric is provided with through holes.

## Revendications

1. Procédé pour la cristallisation et la séparation d'une substance à partir d'une solution dans laquelle la substance est présente, en particulier en solution sursaturée, comprenant les étapes suivantes :
a) introduction de la solution contenant la substance dans un volume de réception d'un récipient de traitement (12) d'un ensemble de cristallisation (10), la solution présentant une température T1 après introduction ;
b) fourniture d'un insert de cristallisation (21) incluant au moins un support (16) destiné à être inséré dans le récipient de traitement (12), la surface du support (16) étant pourvue de germes cristallins (18) pour la substance destinés à la croissance cristalline, de sorte que les germes cristallins (18) sont immobilisés sur la surface du support (16) de l'insert de cristallisation (21) ;
c) positionnement de l'insert de cristallisation (21) dans un réceptacle (14) de l'ensemble de cristallisation (10) de sorte que le support (16) puisse être mis en contact avec la solution ;
d) éventuel refroidissement des germes cristallins (18) tout en ajustant leur température à une température T2, T2 étant inférieure à T1 ;
e) cristallisation de la substance à la surface des germes cristallins (18) ; et
f) éventuel isolement des cristaux formés de la substance dans le récipient de traitement (12),
**caractérisé en ce qu'**au moins un support (16) est en forme de spirale.

2. Procédé selon la revendication 1, **caractérisé en ce qu'**il comprend l'étape f) et que l'étape f) comprend les étapes suivantes :
f1) détachement de la substance cristallisée sur les germes cristallins (18) du support (16) dans le récipient de traitement (12) ;
f2) enlèvement de la solution des cristaux formés ;
f3) éventuel nettoyage des cristaux formés ; et
f4) séchage des cristaux.

3. Procédé selon la revendication 2, **caractérisé en ce qu'**au moins une des étapes f2) et f3) comprend une filtration de la solution avec les cristaux présents dans la solution afin de collecter les cristaux sur un filtre (24), en particulier dans le récipient de traitement (12).

4. Procédé selon l'une quelconque des revendications 1 à 3, **caractérisé en ce qu'**un ensemble (28) comprenant un récipient de traitement (12), un récipient collecteur (30) et une unité de filtration (32) munie d'un filtre (24) est utilisé pour la séparation, le récipient de traitement (12) et le récipient collecteur (30) sont fixés de manière étanche à l'unité de filtration (32) et sont reliés fluidiquement l'un à l'autre par le filtre (34), de sorte que la solution du récipient de traitement (12) est filtrée vers le récipient collecteur (30) à travers le filtre (24) sous vide ou par force centrifuge, des solides étant retenus par le filtre (24) dans le récipient de traitement (12) et séparés de la solution.

5. Procédé selon l'une quelconque des revendications 1 à 4, **caractérisé en ce qu'**il s'agit d'une séparation d'énantiomères, la substance étant un énantiomère d'un mélange racémique et la solution comprenant le mélange racémique.

6. Procédé selon l'une des revendications 1 à 5, **caractérisé en ce que** les étapes a) à e) sont effectuées sous forme de séquence commune répétée dans un récipient de traitement (12), dans lequel entre deux séquences répétées, l'insert de cristallisation (21) du récipient de traitement (12) est remplacé, dans lequel dans une première séquence, le support (16) présente un premier type de germes cristallins (18) et dans une deuxième séquence, le support (16) présente un second type de germes cristallins (18) différent du premier.

7. Procédé selon l'une quelconque des revendications 1 à 6, **caractérisé en ce que** les étapes a) à e) sont effectuées sous forme de séquence commune répétée dans différents récipients de traitement (12), dans lequel le support (16) d'un premier récipient de traitement (12) présente un premier type de germes cristallins (18) et le support (16) d'un deuxième récipient de traitement (12) présente un deuxième type de germes cristallins (18) différent du premier.

8. Procédé selon l'une quelconque des revendications 1 à 7, **caractérisé en ce que** l'étape a) est réalisée au moins partiellement avant l'étape c).

9. Procédé selon l'une quelconque des revendications 1 à 8, **caractérisé en ce que** l'étape a) est réalisée au moins partiellement après l'étape c).

10. Ensemble pour la cristallisation (10) d'au moins une substance à partir d'une solution, en particulier pour la mise en œuvre d'un procédé selon l'une des revendications 1 à 9, comprenant un récipient de traitement (12) destiné à recevoir la solution et un insert de cristallisation (21) incluant au moins un support (16) à insérer dans le récipient de traitement (12), dans lequel la surface du support (16) est pourvue de germes cristallins (18) pour la substance destinés à la croissance cristalline, de sorte que les germes cristallins (18) sont immobilisés sur la surface du support (16) de l'insert de cristallisation (21), le récipient de traitement (12) comportant un réceptacle (14) destiné à recevoir l'insert de cristallisation (21) avec le support (16), l'insert de cristallisation (21) étant détachable du réceptacle (14) de façon non destructive, et l'insert de cristallisation (21) pouvant en outre être positionné de sorte que les germes cristallins (18) peuvent être mis en contact avec la solution, **caractérisé en ce qu'**au moins un support (16) est un support en forme de spirale (16).

11. Ensemble de cristallisation (10) selon la revendication 10, **caractérisé en ce que** l'ensemble de cristallisation (10) comporte un filtre (24) pour filtrer la solution présente dans le récipient de traitement (12).

12. Ensemble de cristallisation selon l'une des revendications 10 ou 11, **caractérisé en ce que** le support (16) est réalisé sous forme de film ou de tissu.

13. Ensemble de cristallisation selon la revendication 12, **caractérisé en ce que** le film ou le tissu est pourvu d'ouvertures de passage.
